# EUROPÄISCHE PATENTANMELDUNG

(11) **EP 4 306 881 A1**
(43) Veröffentlichungstag der Anmeldung: **17.01.2024**
(21) Anmeldenummer: 23183749.3
(22) Anmeldetag: 06.07.2023
(51) Int. Cl.: F25D 11/00, A47F 3/04, F25D 23/12, F25D 25/02, A47B 31/02, A47J 39/00

(54) **SYSTEM, VERFAHREN UND WÄRMEERZEUGUNGSEINRICHTUNG ZUR TEMPERIERUNG ODER ERHITZUNG VON SPEISEN**

(30) Priorität: 13.07.2022 DE 202022103937 U; 24.10.2022 DE 102022127987; 26.01.2023 DE 102023101910
(71) Anmelder: MenüMobil Food Service Systems GmbH, 6401 Inzing (AT)
(72) Erfinder: Abenthung, Johannes, 6401 Inzing (AT)
(74) Vertreter: Körfer, Thomas

(57) **Zusammenfassung**

System und Verfahren zur Temperierung oder Erhitzung von Speisen mit mindestens einen Raum (2) zur Aufnahme mehrerer Trageeinrichtungen (20) für Speisen und mindestens eine Temperiereinrichtung. Der mindestens ein Raum (2) zur Aufnahme mehrerer Trageeinrichtungen (20) weist mindestens eine Halteeinrichtung (3) auf, die dazu ausgelegt ist, die Trageeinrichtung (20) für Speisen aufzunehmen. Die Trageeinrichtungen (20) sind in dem Raum (2) beabstandet angeordnet. Der Raum (2) ist in zumindest zwei Kammern (4, 37) unterteilt, die sich jeweils bis zu zumindest einer Seitenwand (5) erstrecken. Zumindest eine der Trageeinrichtungen (20) erstreckt sich über mehrere Kammern (4, 37). Jede Kammer (4, 37) ist unabhängig temperierbar, und die Kammern (4, 37) sind durch eine Trennwand (6) zueinander thermisch isoliert. Die Temperiereinrichtungen (7, 8) kann jeder der mindestens einen Trageeinrichtung (20) hauptsächlich nur an vorherbestimmten Bereichen Wärmeenergie zuführen und/oder entziehen.

## Beschreibung

Die Erfindung betrifft ein System zur Temperierung oder Erhitzung von Speisen und eine Wärmeerzeugungseinrichtung zur Integration in das System.

Die Menge an Speisen, die zum Verzehr vorbereitet und fertig portioniert an Einrichtungen wie Krankenhäuser, Schulen, Kindertageseinrichtungen, Kantinen usw. geliefert werden nimmt ständig zu. Durch die vorgefertigten Mahlzeiten ist es möglich, die aufwändige und kostenintensive Bereitstellung von Küchen in den Einrichtungen zu vermeiden.

Um die vorbereiteten Speisen zu den Einrichtungen zu transportieren, sind Wagen bekannt, die für den Transport von Tabletts mit den darauf befindlichen Speisen vorgesehen sind. Meist sind warme und kalte Speisen, wie z.B. ein Braten und ein Salat, gemeinsam auf einem Tablett zu transportieren. Dazu weisen die bekannten Wagen zwei für unterschiedliche Temperaturen vorgesehene Kammern auf. Die eine Kammer nimmt dabei den Bereich der Tabletts mit den kühlen Speisen und die andere Kammer den Bereich der Tabletts mit den warmen Speisen auf. Um einen gegenseitigen Temperaturaustausch zwischen den Speisen zu vermeiden ist eine Trennwand zwischen den Kammern vorgesehen.

Die FR 2 684 281 A1 zeigt einen solchen Transportwagen zum Aufbewahren und Verteilen von Speisen. Der Transportwagen ist mit einer isolierenden vertikalen Trennwand ausgestattet, die mit Schlitzen zur Aufnahme von Speisentabletts mit zwei Zonen versehen ist. Eine Zone des Speisetabletts ist für warme Speisen und die andere für kalte Speisen vorgesehen. Der Transportwagen ist mit einer Einheit, die mit einem Kühlabschnitt und einem Kühl- und Heizabschnitt ausgestattet ist, koppelbar. Diese Einheit verbleibt fest und dauerhaft an einem festen Ort, z. B. in Krankenhausstationen. Der Transportwagen wird während der Aufbewahrung bzw. der Wiedererwärmung der warm zu servierenden Mahlzeiten mit dieser Einheit gekoppelt.

Ein Nachteil ist der hohe Energiebedarf zum Erhitzen der Speisen.

Der Erfindung liegt somit die Aufgabe zugrunde ein System zur raschen und energieeffizienten Erhitzung oder Temperierung von Speisen und eine für das System vorgesehene Wärmeerzeugungseinrichtung und ein entsprechendes Verfahren zu schaffen, die es ermöglichen, vorbereitete Speisen standortunabhängig auf die dafür vorgesehene Temperatur effizient zu erwärmen und/oder zu kühlen.

Die Aufgabe wird durch ein System zur Temperierung oder Erhitzung von Speisen mit den Merkmalen des Anspruchs 1, eine Wärmeerzeugungseinrichtung zur Integration in das System mit den Merkmalen des Anspruchs 11 und ein Verfahren mit den Merkmalen des Anspruchs 17 gelöst. Vorteilhafte Weiterbildungen sind Gegenstand der hierauf rückbezogenen Unteransprüche.

Ein Aspekt der Erfindung betrifft ein System zur Temperierung oder Erhitzung von Speisen. Das System weist mindestens einen Raum zur Aufnahme mehrerer Trageeinrichtungen für Speisen und mindestens eine Temperiereinrichtung auf. Mindestens ein Raum zur Aufnahme mehrerer Trageeinrichtungen weist mindestens eine Halteeinrichtung auf. Die mindestens eine Halteeinrichtung nimmt die Trageeinrichtung für Speisen auf. Die Trageeinrichtungen sind in dem oben genannten Raum beabstandet angeordnet. Der Raum ist in zumindest zwei Kammern unterteilt, die sich jeweils bis zu zumindest einer Seitenwand erstrecken. Zumindest eine der Trageeinrichtungen erstreckt sich über mehrere Kammern, wobei jede Kammer unabhängig temperierbar ist. Die Kammern sind durch eine Trennwand zueinander thermisch isoliert. Die Temperiereinrichtungen jeder der mindestens einen Trageeinrichtung sind so ausgelegt, dass hauptsächlich nur an vorherbestimmten Bereichen Wärmeenergie zuführt und/oder entzogen wird.

Die thermisch isolierte Unterteilung der Kammern in Verbindung mit deren unabhängigen Temperierbarkeit und der Zuführung der Wärmeenergie an hauptsächlich nur vorherbestimmten Bereichen der Trageinrichtung ermöglicht in besonders vorteilhafter Weise ein effizientes Erwärmen von Speisen. Durch das gezielte Erwärmen der Trageeinrichtung wird erreicht, dass die Energieverluste durch unnötiges Erwärmen der Trageeinrichtung in Bereiche, in denen keine Speisen aufgebracht sind, deutlich reduziert sind.

Bevorzugt erzeugt die Temperiereinrichtung zumindest einen temperierten Luftstrom zum Transport der Wärmeenergie. Dabei ist zumindest ein temperierter Luftstrom zum Transport der Wärmeenergie zwischen den Kammern mit Hilfe einer Luftstromumschalteinrichtung umlenkbar. So können in besonders vorteilhafter Weise verschiedene Kammern wahlweise mit einem gemeinsamen temperierten Luftstrom oder mit einem individuell temperierten Luftstrom versorgt werden. Dabei wird besonders vorteilhaft für den gemeinsamen temperierten Luftstrom nur eine Tempereiereinrichtung benötigt.

Bevorzugt ist der mindestens eine Raum zur Aufnahme mehrerer Trageeinrichtungen für Speisen in einem Aufnahmewagen und die mindestens eine Tempereinrichtung in einer Andockstation angeordnet. Der Aufnahmewagen ist mit der Andockstation koppelbar. Dies ermöglicht in besonders vorteilhafter Weise einen einfachen und energiesparenden Transport von vorgefertigten Speisen. Außerdem ist es besonders vorteilhaft, dass die Herstellungskosten des Systems deutlich geringer sind.

Bevorzugt ist der abgekoppelte Aufnahmewagen thermisch isolierend verschließbar. Dadurch lassen sich gekühlte und/oder erwärmte Speisen in vorteilhafter Weise mit geringen Energieverlust bei unterschiedlichen Umgebungstemperaturen transportieren.

Der Aufnahmewagen weist in bevorzugter Weise mindestens ein Dichtelement auf, das dazu ausgelegt ist, eine Schnittstelle zwischen dem Aufnahmewagen und der Andockstation thermisch zur Umgebung abzudichten. Mit den Dichtelementen wird in vorteilhafter Weise ein Temperaturausgleich des Innenraums mit der Umgebung verringert.

Bevorzugt weist mindestens eine Seitenwand der mindestens zwei Kammern mindestens eine Austrittsöffnung für den Luftstrom auf. Zwischen den temperierten Luftströmen ist ein Trennelement in der Seitenwand vorgesehen. Bevorzugt ist in jeder der durch die vertikal beabstandeten Trageeinrichtungen gebildeten Teilkammern mindestens eine Austrittsöffnung vorgesehen. Weiter bevorzugt lenkt die Austrittsöffnung den temperierten Luftstrom in eine vorherbestimmte Richtung.

Die Austrittsöffnungen in der Seitenwand und die Trennelemente, die bevorzugt den Teilkammern zugeordnet sind, ermöglichen in besonders vorteilhafter Weise eine punktgenaue Wärmezufuhr an die Trageeinrichtung mit unabhängigen Temperaturen. So ist es möglich, Speisen mit unterschiedlichen Erwärmungsparametern fachgerecht zu erwärmen.

Vorzugsweise ist die mindestens eine Austrittsöffnung für den temperierten Luftstrom direkt in die Seitenwand geformt. Die direkt in die Seitenwand geformten Austrittsöffnungen ermöglichen in vorteilhafter Weise einen strömungsgünstigen Luftstrom mit geringen unerwünschten Verwirbelungen bzw. definierten Verwirbelungen.

Die Seitenwand aus einer Platte besteht bevorzugt aus einem Metallblech und besonders bevorzugt aus einem Edelstahlblech. Die Ausführung der Seitenwände aus Metall insbesondere aus Edelstahl ermöglichen besonders vorteilhaft eine dem Lebensmittelrecht entsprechende Reinigung. Dies lässt sich in einfacher Weise einstückig fertigen.

Die mindestens eine Austrittsöffnung für den temperierten Luftstrom weist bevorzugt eine Düse auf. Eine Düse als Austrittsöffnung ermöglicht in vorteilhafter Weise ein gezieltes Lenken des Luftstroms auf den gewünschten Bereich der Trageeinrichtung.

Jede Trageeinrichtung und/oder Gruppen von Trageeinrichtungen ist bzw. sind bevorzugt unterschiedlich temperierbar.

Ein weiterer Aspekt der Erfindung betrifft eine Wärmeerzeugungseinrichtung zur Integration in ein System zur Temperierung oder Erhitzung von Speisen. Die Wärmeerzeugungseinrichtung weist mindestens zwei elektrische Heizeinheiten, mindestens eine Temperatursensoreinheit je Heizeinheit und mindestens eine Regeleinheit je Heizeinheit auf. Die jeweils eine Temperatursensoreinheit ist thermisch an eine Heizeinheit gekoppelt. Des Weiteren ist die Heizeinheit und die Temperatursensoreinheit mit der Regeleinheit funktional verbunden. Die Regeleinheit ist dazu ausgelegt eine Temperatur der jeweiligen Heizeinheit mit Hilfe der jeweiligen Temperatursensoreinheit in einem vorgegebenen Bereich einzustellen, wobei die Temperaturen der Heizeinheiten voneinander unabhängig einstellbar sind.

Die Wärmeerzeugungseinrichtung für ein System zur Temperierung oder Erhitzung von Speisen mit der Regeleinheit und den unabhängigen Heizeinheiten mit den thermisch verbunden Temperatursensoreinheiten ermöglicht in vorteilhafter Weise eine exakte Temperierung oder Erhitzung eines oder mehrerer Luftströme mit unterschiedlichen Temperaturen.

Bevorzugt ist zumindest eine Heizeinheit auf einem Trägerelement befestigt, und/oder zumindest eine Heizeinheit flach ausgeführt. Die flach ausgeführte Heizeinheit lässt sich in besonders vorteilhafter Weise in Bereich mit engen Platzverhältnissen integrieren und ermöglicht eine besonders gute Wärmeabgabe.

Zwischen jeder der Heizeinheiten mit unterschiedlich einstellbarer Temperatur ist vorzugsweise ein thermisches Trennelement vorgesehen. Die thermischen Trennelemente stellen in besonders vorteilhafter Weise eine thermische Entkopplung zwischen den durch die Heizelemente gebildeten Temperaturzonen zur Verfügung.

Zumindest eine der Heizeinheiten weist bevorzugt ein Widerstandselement auf. Dabei ist das Widerstandselement in einem Kunststoff, bevorzugt in Silikon, eingebettet. Ein Heizelement, dessen Widerstandselement in einem Kunststoff oder in Silikon eingebettet ist, lässt sich in besonders vorteilhafter Weise leicht reinigen und desinfizieren.

Bevorzugt ist die jeweilige Temperatursensoreinheit gemeinsam mit dem Widerstandselement in der Heizeinheit eingebettet. Die Temperatursensoreinheit, die gemeinsam mit dem Widerstandselement in der Heizeinheit eingebettet ist, ermöglicht in besonders vorteilhafter Weise ein exaktes Messen der Temperatur des Heizelements und damit eine exakte Temperaturregelung.

Die dem Trägerelement gegenüberliegende Oberfläche der Heizeinheit weist bevorzugt eine Lamellenform oder eine Wellenstruktur auf. Die Oberfläche des Heizelements mit der Lamellenform oder Wellenstruktur ermöglicht in vorteilhafter Weise eine verbesserte Wärmeübertragung an einen vorbeiströmenden Luftstrom.

Ein weiterer Aspekt der Erfindung betrifft ein erfindungsgemäßes Verfahren zur Temperierung oder Erhitzung von Speisen, mit folgenden Schritten: Auswählen einer Betriebsart eines gemeinsamen Temperierens von zumindest zwei Kammern eines Raums zur Aufnahme mehrerer Trageeinrichtungen oder eines separaten Temperierens von zumindest zwei Kammern eines Raums zur Aufnahme mehrerer Trageeinrichtungen. Ist die Betriebsart des gemeinsamen Temperierens ausgewählt, wird in einem ersten Schritt ein Luftstrom erzeugt. Der erzeugte Luftstrom wird in einem weiteren Schritt in Richtung einer erste Temperiereinrichtung geleitet. In einem weiteren Schritt wird der Luftstrom auf die erste Temperiereinrichtung freigegeben. Der Luftstrom wird in einem weiteren Schritt für die erste Kammer des Raums freigegeben. Ein Teil des Luftstroms wird in einem weiteren Verfahrensschritt der ersten Kammer zugeführt. Ein weiterer Teil des Luftstroms wird in einem weiteren Verfahrensschritt der zweiten Kammer zugeführt. Ist die Betriebsart des separaten Temperierens gewählt, werden die folgenden Verfahrensschritte ausgeführt. In einem Schritt wird eine zweiten Temperiereinrichtung aktiviert. In einem weiteren Schritt wird ein erster Luftstrom erzeugt. Der erste Luftstrom wird in einem weiteren Schritt über eine zweite Temperiereinrichtung in die erste Kammer geleitet. Der Luftkanal wird in einem nächsten Schritt gesperrt. In einem weiteren Schritt wird ein zweiter Luftstrom erzeugt und in einem nächsten Schritt der zweiten Kammer zugeführt.

Bevorzugt erfolgt in der Betriebsart des gemeinsamen Temperierens das Erzeugen eines Luftstroms mit einer ersten und zweiten Luftumwälzeinrichtung, insbesondere mit einem ersten Ventilator und einem zweiten Ventilator. Das Leiten des mit der ersten Luftumwälzeinrichtung, insbesondere dem ersten Ventilator, erzeugten Luftstroms in Richtung einer erste Temperiereinrichtung erfolgt in dieser Betriebsart durch Einstellen einer Luftstromleitklappe. In der Betriebsart des gemeinsamen Temperierens erfolgt das Freigeben des Luftstroms auf die erste Tempereiereinrichtung durch Öffnen einer ersten Sperrklappe. Weiter bevorzugt erfolgt in der Betriebsart des gemeinsamen Temperierens das Freigeben des Luftstroms für die erste Kammer des Raums durch Öffnen einer zweiten Sperrklappe. Bevorzugt erfolgt in der Betriebsart des separaten Temperierens das Erzeugen eines ersten Luftstroms mit der ersten Luftumwälzeinrichtung, insbesondere mit dem ersten Ventilator. In der Betriebsart des separaten Temperierens erfolgt das Leiten des mit der ersten Luftumwälzeinrichtung, insbesondere dem ersten Ventilator, erzeugten Luftstroms über die zweite Temperiereinrichtung in die erste Kammer bevorzugt durch Einstellen einer Luftstromleitklappe.

In dieser Betriebsart erfolgt das Sperren des Luftkanals bevorzugt durch Schließen der ersten Sperrklappe und der zweiten Sperrklappe. Des Weiterein erfolgt in der Betriebsart des separaten Temperierens das Erzeugen des zweiten Luftstroms bevorzugt mit der zweiten Luftumwälzeinrichtung, insbesondere dem zweiten Ventilator. Das Durchführen des Verfahrens mit Hilfe dieser Komponenten ermöglicht in besonders vorteilhafter Weise ein effizientes Kühlen und/oder Erwärmen von Speisen. Durch das gezielte Temperieren der Trageeinrichtung wird erreicht, dass die Energieverluste durch unnötiges Erwärmen der Trageeinrichtung in Bereiche, in denen keine Speisen aufgebracht sind, deutlich reduziert sind. Des Weiteren wird durch die gemeinsame Nutzung der Temperiereinrichtung, insbesondere zur Kühlung der Speisen, in besonders vorteilhafter Weise die notwendige Kühlmittelmenge reduziert, um effizient zu sein.

Bevorzugt erfolgt in der Betriebsart des gemeinsamen Desinfizierens in einem ersten Schritt ein Aktivieren der zweiten Temperiereinrichtung. Mit der ersten und zweiten Luftumwälzeinrichtung, insbesondere mit dem ersten Ventilator und dem zweiten Ventilator, wird ein Luftstrom erzeugt. Dieser Luftstrom wird über die zweite Temperiereinrichtung und weiter in Richtung der ersten Temperiereinrichtung geleitet. Der Luftstrom wird auf die erste Temperiereinrichtung freigegeben. Außerdem wird der Luftstrom für den Luftkanal freigegeben. Der Luftstrom wird in einem letzten Schritt auf die erste Luftumwälzeinrichtung zurückgeführt.

Bevorzugt erfolgt in der Betriebsart des gemeinsamen Trocknens in einem ersten Schritt ein Öffnen einer Frischluftöffnung gefolgt vom Öffnen einer Abluftöffnung. Nun wird die zweite Temperiereinrichtung aktiviert. Ein aus der Frischluftöffnung angesaugter Luftstrom wird durch die erste und zweite Luftumwälzeinrichtung, insbesondere mit dem ersten Ventilator und dem zweiten Ventilator, erzeugt. Der Luftstrom wird über die zweite Temperiereinrichtung geleitet. Der erzeugten Luftstrom wird weiter in Richtung der ersten Temperiereinrichtung geleitet und auf die erste Temperiereinrichtung und weiter für den Luftkanal freigegeben. Der Luftstrom wird schließlich durch die Abluftöffnung abgeleitet.

Nachfolgend werden Ausführungsbeispiele der Erfindung anhand der Zeichnung beispielhaft beschrieben. In der Zeichnung zeigen:
- FIG. 1:: ein Ausführungsbeispiel eines erfindungsgemäßen Systems zur Temperierung oder Erhitzung von Speisen;
- FIG. 2A:: eine Zirkulation von temperierten Luftströmen im Ausführungsbeispiel des erfindungsgemäßen Systems zur Temperierung oder Erhitzung von Speisen;
- FIG. 2B:: eine Führung von temperierten Luftströmen durch an einer Seiten angeformte Luftführungen im Ausführungsbeispiel des erfindungsgemäßen Systems zur Temperierung oder Erhitzung von Speisen;
- FIG. 3:: eine Innenansicht des Systems zur Temperierung oder Erhitzung von Speisen mit zwei Kammern gemäß einem erfindungsgemäßen Ausführungsbeispiel;
- FIG. 4:: eine Innenansicht des Systems zur Temperierung oder Erhitzung von Speisen mit Teilkammern gemäß einem erfindungsgemäßen Ausführungsbeispiel;
- FIG. 5:: ein System zur Temperierung oder Erhitzung von Speisen, das einen Aufnahmewagen und eine Andockstation aufweist, gemäß einem erfindungsgemäßen Ausführungsbeispiel;
- FIG. 6A:: eine Schnittdarstellung des Systems zur Temperierung oder Erhitzung von Speisen in einer Betriebsart zur gemeinsamen Kühlung der ersten Kammer und der zweiten Kammer gemäß einem erfindungsgemäßen Ausführungsbeispiel;
- FIG. 6B:: eine Schnittdarstellung des Systems zur Temperierung oder Erhitzung von Speisen in einer Betriebsart zum separaten Temperieren der ersten Kammer und der zweiten Kammer gemäß einem erfindungsgemäßen Ausführungsbeispiel;
- FIG. 6C:: eine Schnittdarstellung des Systems zur Temperierung oder Erhitzung von Speisen insbesondere der Andockstation in einer Betriebsart eines Desinfizierens gemäß einem erfindungsgemäßen Ausführungsbeispiel;
- FIG. 6D:: eine Schnittdarstellung des Systems zur Temperierung oder Erhitzung von Speisen insbesondere der Andockstation in einer Betriebsart eines Trocknens gemäß einem erfindungsgemäßen Ausführungsbeispiel;
- FIG. 7:: einen verschlossenen Aufnahmewage gemäß einem erfindungsgemäßen Ausführungsbeispiel;
- FIG. 8:: eine Schnittdarstellung des Systems zur Temperierung oder Erhitzung von Speisen mit integrierter Temperiereinrichtung in einer Betriebsart zur separaten Temperierung der ersten Kammer und der zweiten Kammer gemäß einem erfindungsgemäßen Ausführungsbeispiel;
- FIG. 9A:: eine Vorderansicht einer Wärmeerzeugungseinrichtung gemäß einem erfindungsgemäßen Ausführungsbeispiel;
- FIG. 9B:: eine Seitenansicht einer Wärmeerzeugungseinrichtung gemäß einem erfindungsgemäßen Ausführungsbeispiel; und
- FIG. 10:: ein Flussdiagramm eines Verfahrens zur Temperierung oder Erhitzung von Speisen gemäß einem erfindungsgemäßen Ausführungsbeispiel.

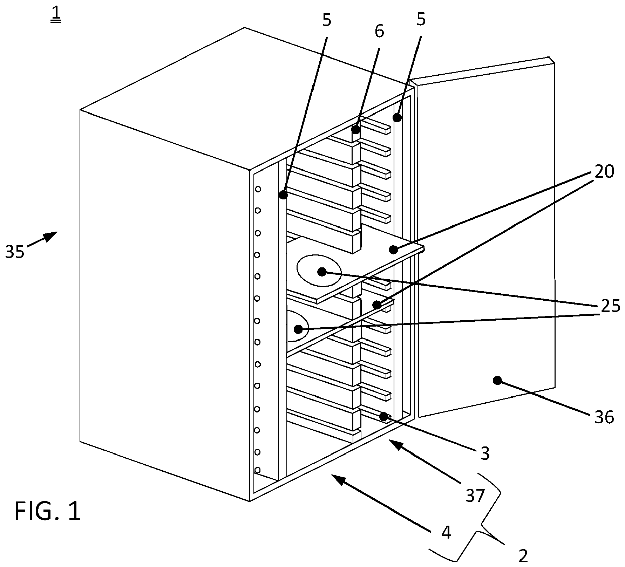

FIG. 1 zeigt ein Ausführungsbespiel zum erfindungsgemäßen System 1 zur Temperierung oder Erhitzung von Speisen. Das System wird durch ein kastenförmiges, dem System zugehöriges Gehäuse 35 umschlossen. Dieses Gehäuse besteht mindestens aus äußeren Seitenwänden, einer äußeren Rückwand, einem äußeren Boden, einem äußeren Deckel und einer Türe 36. Das Gehäuse 35 kann neben der Kastenform auch in Formen gestaltet sein, die beispielsweise eine Integration in ein Transportmittel erlauben.

Damit ein Temperaturaustausch zwischen Innenraum und Außenseite des Gehäuses minimiert wird, ist das Gehäuse isoliert aufgebaut. Die oben beschriebenen Elemente des Gehäuses sind im Ausführungsbeispiel sandwichförmig ausgebildet. Eine erste und eine dritte Schicht bildet die Außen- bzw. Innenfläche des Gehäuses. Zwischen dieser ersten und dritten Schicht ist als zweite Schicht eine Isolationsschicht vorgesehen. Diese Isolationsschicht besteht aus einem aufgeschäumten Kunststoff, einer Mineralwolle oder für besondere Anforderungen aus einem zumindest annähernd luftleeren Raum.

Das System zur Temperierung oder Erhitzung von Speisen enthält weiter mindestens einen Raum 2 zur Aufnahme mehrerer Trageeinrichtungen 20 für Speisen. Dieser Raum 2 ist innerhalb des Gehäuses angeordnet. In dem Raum 2 sind die Trageeinrichtungen 20 vertikal übereinander angeordnet und bilden jeweils eine horizontale Fläche. Dabei sind die Trageinrichtungen 20 beabstandet angeordnet. Der Abstand zwischen den Trageeinrichtungen ist mindestens so groß, dass die in dem System befindlichen auf den Trageeinrichtungen 20 angeordneten Speisen oder Behältnisse für die Speisen nicht mit der darüber angeordneten Trageeinrichtung 20 in Berührung kommen können.

Das System enthält Halteeinrichtungen 3, um die Trageeinrichtungen für Speisen in der oben beschriebenen vertikalen Weise aufzunehmen. Diese Trageeinrichtungen 20 sind in dem Raum 2 zur Aufnahme der Trageeinrichtungen angeordnet. Die Halteeinrichtungen 3 bestehen aus Leisten auf welchen die Trageeinrichtungen 20 so aufliegen, dass eine vorgesehene vertikale Position eingehalten wird. Die Halteeinrichtungen 3 können auch als Schienen vorgesehen sein. So kann ein Kippen der Trageeinrichtung 20 verhindert werden, wenn die Trageeinrichtung 20 nicht vollständig in den Raum 2 eingeschoben ist.

Der Raum 2, von dem die Trageeinrichtungen 20 aufgenommen sind, ist im Ausführungsbeispiel in zumindest zwei Kammern 4, 37 unterteilt. Die in FIG. 1 dargestellten zwei Kammern 4, 37 erstrecken sich jeweils bis zumindest einer Seitenwand 5. Die zumindest eine Seitenwand 5 ist beabstandet zum Gehäuse 35 angeordnet. Wie in diesem Ausführungsbeispiel dargestellt, erstrecken sich die Trageeinrichtungen 20 über die beiden Kammern 4, 37.

Jede Kammer der beiden Kammern 4, 37 ist unabhängig temperierbar. So können beispielsweise Speisen, die in einer ersten Kammer 4 angeordnet sind, erhitzt und eine gleichzeitig weitere Speise, die in einer zweiten Kammer 37 angeordnet sind, gekühlt werden. Dazu sind die Kammern 4, 37 durch eine Trennwand 6 gegenseitig thermisch isoliert. Die Trennwand ist dazu aus einem Kunststoff mit besonders niedrigem Wärmeleitwert oder einem isolierenden Schichtsystem aufgebaut. Bei dem Schichtsystem ist eine erste und eine dritte Schicht vorgesehen, die die Außenflächen der Trennwand 6 bilden. Zwischen diesen Außenflächen ist als zweite Schicht eine Isolationsschicht vorgesehen. Diese Isolationsschicht besteht aus einem aufgeschäumten Kunststoff, einer Mineralwolle oder, für besondere Anforderungen, aus einem zumindest annähernd luftleeren Raum.

Alternativ ist auch ein Andocken eines Aufnahmewagens an eine Andockstation denkbar. Dabei ist auch denkbar, dass der zu heizende Bereich zunächst gekühlt wird, bevor er erwärmt wird. Dabei kann das Kühlaggregat der Kühlung für den zu kühlenden Bereich mitbenutzt werden.

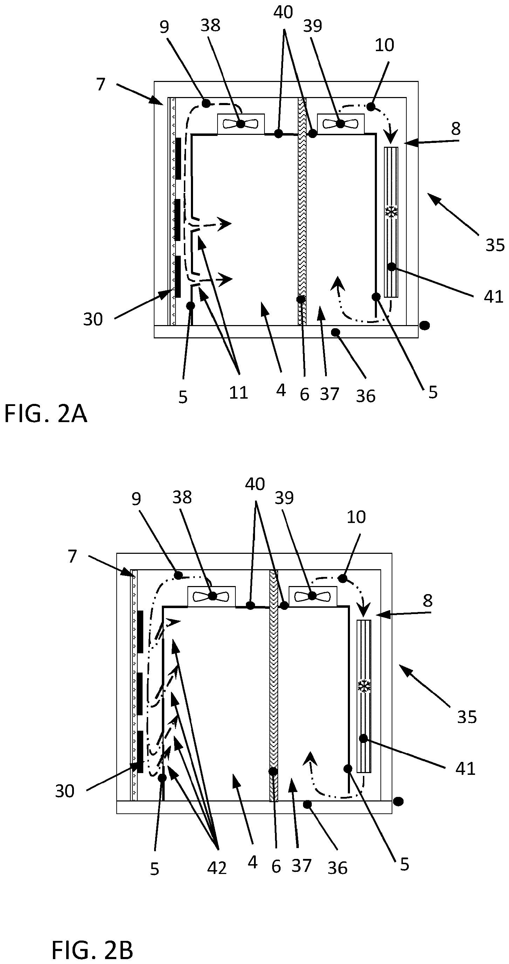

FIG. 2A stellt eine Zirkulation von temperierten Luftströmen im erfindungsgemäßen System zur Temperierung oder Erhitzung von Speisen am Beispiel von zwei Kammern 2, 37, die mit unterschiedlichen Temperaturen beaufschlagt werden sollen, dar. In FIG. 2A ist eine Ansicht von oben in das System 1 zur Temperierung oder Erhitzung von Speisen dargestellt. Das System 1 enthält in diesem Ausführungsbeispiel auf der linken Seite eine Temperiereinrichtung 7 zur Erzeugung eines heißen Luftstroms 9 und auf der rechten Seite eine Temperiereinrichtung 8 zur Erzeugung eines kalten Luftstroms 10.

Zur Erzeugung des heißen Luftstroms 9 enthält das System 1 eine Wärmeerzeugungseinrichtung 30 und eine Luftumwälzeinrichtung, im Folgenden auch Ventilator 38 genannt. Der Ventilator 38 ist an einer inneren Rückwand 40 angeordnet. Der Ventilator 38 dient zur Erzeugung des Luftstroms 9. Dieser Luftstrom 9 wird durch einen Strömungskanal, der durch die Seitenwand 5 mit der innere Rückwand 40 und dem Gehäuse 35 gebildet ist, so über die Wärmeerzeugungseinrichtung 30 geleitet, dass sie den daran vorbei geleiteter Luftstrom 9 erhitzt. Der so erhitzte und damit heiße Luftstrom 9 wird über Austrittsöffnungen 11 in die entsprechende Kammer 4 eingeleitet. Die Austrittsöffnungen 11 sind so angeordnet und/oder geformt, dass der heiße Luftstrom 9 die Trageeinrichtung genau an der gewünschten Stelle mit dem heißen Luftstrom 9 beaufschlagt.

Der kalte Luftstrom 10 wird in dem System 1 mit Hilfe eines darin enthaltenen Kältegeräts 41 und eines Ventilators 39 erzeugt. Die zu kühlende Luft wird durch den Ventilator aus der Kammer 37, in der sich die kühlen Speisen befinden, eingesaugt, um den kalten Luftstrom 10 zu erzeugen. Der so erzeugte Luftstrom 10 wird über einen Wärmetauscher des Kältegeräts 41 geleitet. Dieser Wärmetauscher entzieht dem Luftstrom Wärmeenergie. Der erzeugte kalte Luftstrom 10 wird weiter in Richtung Türe 36 geleitet. Zwischen Tür 36 und Seitenwand 5 ist ein Spalt vorgesehen, um den kalten Luftstrom auf die Tragevorrichtungen 20 zu richten. So wird der gesamte Inhalt der Kammer 37 mit den zu kühlenden Speisen gleichmäßig abgekühlt.

Je nach Anforderung kann auch nur eine Wärmeerzeugungseinrichtung 30 vorgesehen sein, so dass beispielsweise die Kammer 37 ohne Wärmeerzeugungseinrichtung oder Kühlgerät ihre innere Temperatur nur geringfügig in abhängig von der Isolierung ändert.

FIG. 2B zeigt ein Ausführungsbeispiel des erfindungsgemäßen Systems zur Temperierung oder Erhitzung von Speisen, bei dem eine Führung von temperierten Luftströmen durch in der Seitenwand 5 angeformte Austrittsstrukturen 42, hier in Form von Lamellen dargestellt, erfolgt. In FIG. 2B ist das System mit zwei Kammern 2, 37, die mit unterschiedlichen Temperaturen beaufschlagt werden sollen, dargestellt. Die Erzeugung des kalten Luftstroms 10 in der rechten Kammer erfolgt entsprechend dem zu FIG. 2A beschriebenen Ausführungsbeispiel.

Der heiße Luftstrom 9 in der linken Kammer 4 des Systems 1 wird mit Hilfe eines Ventilators 38 erzeugt. Der Ventilator 38 ist an der inneren Rückwand 40 angeordnet. Der durch den Ventilator 38 erzeugte Luftstrom wird über die Wärmeerzeugungseinrichtung 30 geleitet, um ihn zu erhitzen. Der durch die Wärmeerzeugungseinrichtung 30 erhitzte und damit heiße Luftstrom 9 wird über die in der Seitenwand angeformten Austrittsstrukturen 42, welche die Austrittsöffnungen bilden, in die entsprechende Kammer 4 eingeleitet. Der heiße Luftstrom 9 wird in diesem Beispiel über vier Lamellen, die die Austrittsstrukturen 42 bilden, in die Kammer 4 eingeleitet. Dabei sind die Lamellen so ausgerichtet, dass deren Öffnung entgegen der Strömungsrichtung des heißen Luftstroms 9 orientiert ist.

Die Anzahl, Form und Orientierung der Luftführungen ist nicht auf das in FIG. 2A und 2B dargestellte Beispiel beschränkt. Bevorzugt sind die Austrittsstruktur 42 einstückig in der Seitenwand 5 angeformt. Dazu werden die Austrittsstrukturen 42 durch Umformung der Seitenwand 5 mit Hilfe eines Stanzverfahrens und/oder Prägeverfahrens erzeugt.

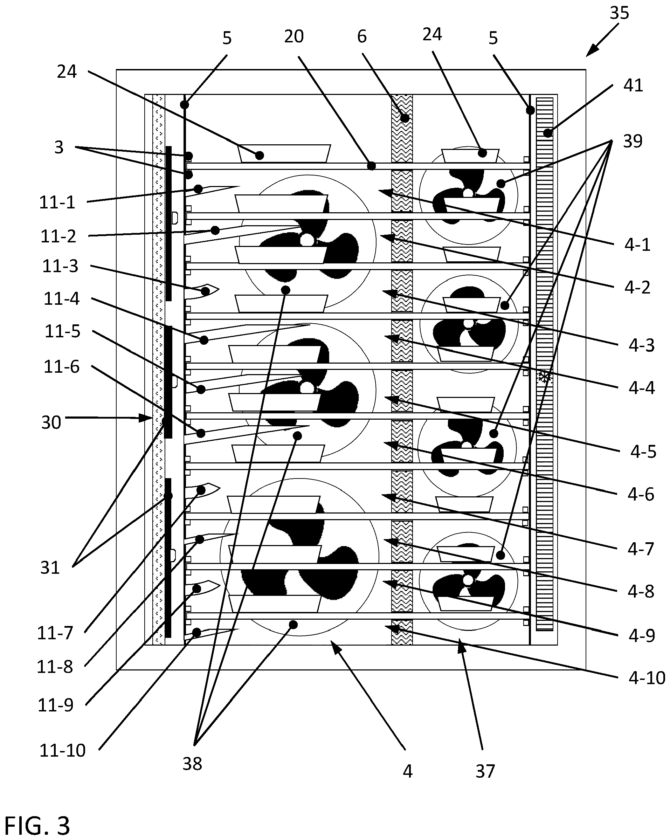

FIG. 3 zeigt eine Innenansicht zu einem erfindungsgemäßen Ausführungsbeispiel des Systems 1 zur Temperierung oder Erhitzung von Speisen 24 mit zwei Kammern 4, 37. Die Blickrichtung entspricht dabei der Richtung, in die die Trageeinrichtungen 20 in das System 1 eingeschoben werden.

An den Seitenwänden 5 sind Halteeinrichtungen 3 für die Trageeinrichtungen 20 angebracht und beispielsweise als Schienen ausgeführt. Die Tageeinrichtungen 20 werden von der Vorderseite des Systems 1 in die Halteeinrichtungen 3 eingeschoben. Eine Ausführung der Halteeinrichtungen 3 in Form von Schienen stellt sicher, dass die Trageeinrichtungen nicht aus den Halteeinrichtungen heraus kippen können, selbst wenn diese nur teilweise eingeschoben sind.

Zur thermischen Trennung der beiden Kammern 4, 37 ist eine Trennwand 6 vorgesehen. In FIG. 3 ist deutlich zu erkennen, dass die Trennwand 6 im Bereich der Trageeinrichtungen 20 unterbrochen ist, um das Einschieben der Trageeinrichtungen zu ermöglichen. Die eingeschobenen Trageeinrichtungen 20 reichen durch die Unterbrechungen der Trennwand 6 hindurch. Die durch die Unterbrechungen entstehenden Schlitze in der Trennwand 6 können Dichtelemente enthalten. Die Dichtelemente dienen dann zur Unterbindung eines Luftstroms zwischen den Kammern 4, 37 mit unterschiedlichen Temperaturniveaus.

In dem in FIG. 3 dargestellten Ausführungsbeispiel ist die durch die Trennwand 6 abgetrennte linke Kammer 4 zum Erhitzen von Speisen 24 vorgesehen. An der inneren Rückwand 40 sind drei Ventilatoren 38 angeordnet (siehe auch FIG. 2). Mit Hilfe der Ventilatoren 38 wird ein zu erhitzender Luftstrom (109 aus FIG. 2) erzeugt. Als Wärmequelle dient hierbei im Ausführungsbeispiel eine zwischen dem Gehäuse 35 und der linken Seitenwand 5 angeordnete Wärmeerzeugungseinrichtung 30. Die Wärmeerzeugungseinrichtung 30 enthält in diesem Ausführungsbeispiel drei Heizeinheiten 31. Mit Hilfe der im Beispiel drei Heizeinheiten wird der vorbeiströmende Luftstrom erhitzt. Es können auch mehr Heizeinheiten 31 vorhanden sein bis z. B. eine Heizeinheit 31 je Trageeinrichtungen 20.

Der heiße Luftstrom wird über Austrittsöffnungen 11, 11-1, 11-2 ... 11-10 auf jeweils eine untere Fläche der Trageeinrichtungen 20 gerichtet. Dabei sind die Austrittsöffnungen so gestaltet, dass ein optimales Anströmen des zu erhitzenden Bereichs der jeweiligen Trageeinrichtung 20 erreicht wird. Beispielsweise sind die Austrittsöffnungen 11-1, 11-8 und 11-9 als kurze röhrenförmige Elemente mit einem zur Trageeinrichtung 20 abgeschrägten Ende ausgeführt. Die Austrittsöffnungen 11-2, 11-4, 11-5 und 11-6 sind beispielsweise als lange röhrenförmige Elemente mit einem zur Trageeinrichtung 20 abgeschrägten Ende ausgeführt, so dass ein gezieltes punktuelles Erwärmen der jeweiligen Trageeinrichtung 20 erreicht wird. Eine weitere geeignete Form für die Austrittsöffnungen 11-3, 11-7 und 11-9 ist eine bogenförmige Ausführung. Des Weiteren sind beispielsweise kastenförmige Austrittsöffnungen geeignet, den heißen Luftstrom auf einen größeren Bereich der Trageeinrichtung 20 zu richten. Außerdem können die Austrittsöffnungen durch Lamellen in der Seitenwand 5 realisiert sein. Die Ausführung der Austrittsöffnungen ist nicht auf die oben beschriebenen Formen beschränkt. Zum Beispiel kommt die Lammellenform nach FIG. 2B auch hier in Frage.

Die rechte Kammer 37 des Systems 1 ist in diesem Ausführungsbeispiel zum Kühlen der darin befindlichen Speisen 24 vorgesehen. Um den zu kühlenden Luftstrom 10 zu erzeugen, sind hier beispielhaft vier Ventilatoren 39 vorgesehen. Des Weiteren ist ein Kältegerät 41 vorgesehen, dessen Wärmetauscher zwischen dem Gehäuse 35 und der rechten Seitenwand 5 angeordnet ist. Der so erzeugte kalte Luftstrom wird, wie bereits beschrieben, über einen Spalt zwischen Tür 36 und der Seitenwand 5 in Richtung der Trageeinrichtungen geleitet. Es ist jedoch auch möglich Austrittsöffnungen entsprechend der linken Kammer 4 vorzusehen.

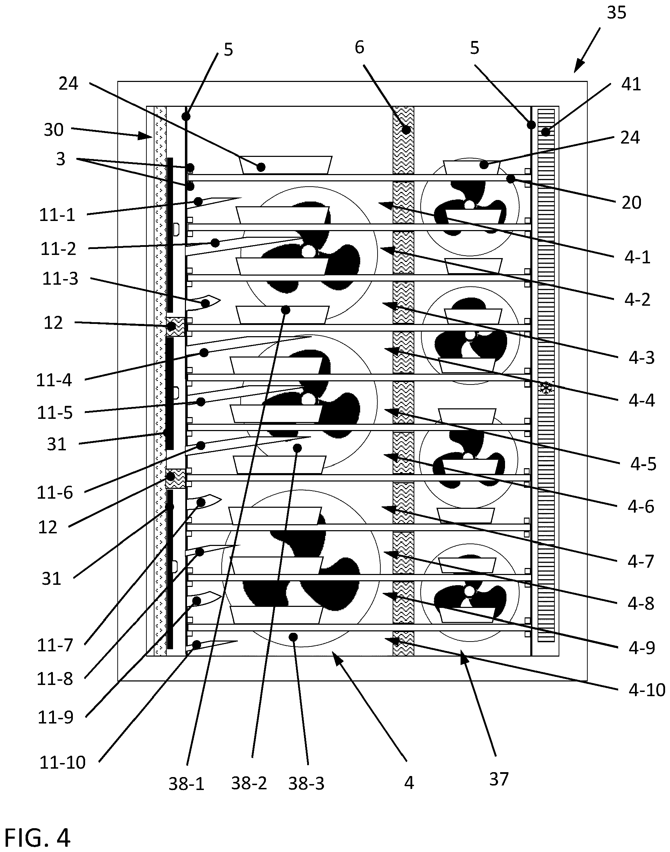

FIG. 4 zeigt eine Innenansicht des Systems 1 zur Temperierung oder Erhitzung von Speisen 24 mit Teilkammern gemäß einem erfindungsgemäßen Ausführungsbeispiel. In diesem Ausführungsbeispiel ist die linke Kammer 4 mit Hilfe zusätzlicher Trennelemente 12 und in der zugehörigen horizontalen Ebene angebrachten Trageeinrichtungen 20 im Beispiel in drei Teilkammern unterteilt. Jeder dieser Teilkammern ist jeweils ein Heizelement 31-1, 31-2 und 31-3 und jeweils ein Ventilator 38-1, 38-2 und 38-3 zugeordnet. Es können auch zwei oder mehr als drei Teilkammern vorhanden sein.

Mit Hilfe dieser Anordnung lassen sich Speisen 24 gezielt entsprechend vorgegebener Parameter erhitzen. So können zum Beispiel in einer mittleren Ebene Speisen einer dafür vorgesehenen Temperatur erwärmt werden, indem die der Ebene zugeordnete Heizeinheit 31-2 auf eine entsprechende Temperatur eingestellt ist. Mit dem dazugehörigen Ventilator 38-2 wird der Luftstrom erzeugt, der über das Heizelement 31-2 mit Hilfe der zugehörigen Austrittsöffnungen 11-4, 11-5 und 11-6 auf die entsprechenden Trageeinrichtungen 20 übertragen wird. Die Erzeugung des heißen Luftstroms erfolgt analog für die obere Ebene, die das Heizelement 31-1 mit dem zugehörigen Ventilator 38-1 enthält, mit einer für die in dieser Ebene vorgesehenen Temperatur. Selbiges gilt für die untere Ebene mit Heizelement 31-3 und Ventilator 130-3.

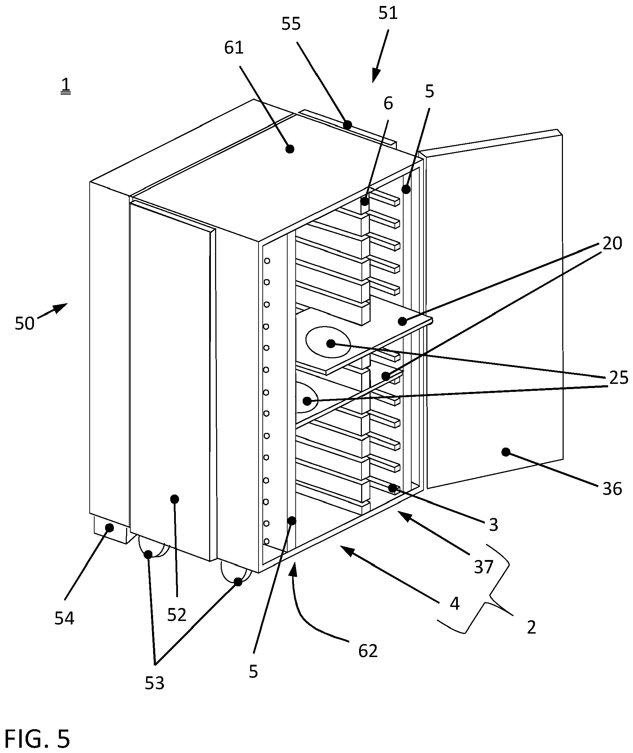

Alternativ ist auch ein Andocken eines Aufnahmewagens 51 an eine Andockstation 50 denkbar. FIG. 5 zeigt ein erfindungsgemäßes Ausführungsbeispiel für ein System 1 zur Temperierung oder Erhitzung von Speisen, das einen Aufnahmewagen 51 und eine Andockstation 50 aufweist. Der Aufnahmewagen 51 ist mit der Andockstation 50 koppelbar. Der Aufnahmewagen 51 ist dazu ausgelegt, Trageinrichtungen 20 mit den darauf vorbereiteten Speisen zu transportieren. Die Andockstation 50 enthält die gesamten technischen Einrichtungen, die zur Temperierung und Erhitzung der Speisen in dem Aufnahmewagen 51 notwendig sind.

Der Aufnahmewagen 51 enthält mindestens einen Raum 2 zur Aufnahme mehrerer Trageeinrichtungen 20 für Speisen. Dieser Raum 2 ist innerhalb des Gehäuses 61 des Aufnahmewagens 51 angeordnet. In dem Raum 2 sind die Trageeinrichtungen 20 vertikal übereinander angeordnet und bilden jeweils eine horizontale Fläche. Dabei sind die Trageinrichtungen 20, wie bereits zu FIG. 1 beschrieben, beabstandet angeordnet.

Der Raum 2 des Aufnahmewagens ist im Ausführungsbeispiel in zumindest zwei Kammern 4, 37 unterteilt. Die zwei Kammern 4, 37 erstrecken sich jeweils bis zu einer Seitenwand 15 mit Austrittsöffnungen und einer Seitenwand 16 mit Luftspalt. Die Seitenwände 15, 16 sind beabstandet zum Gehäuse 61 angeordnet. Wie in diesem Ausführungsbeispiel dargestellt, erstrecken sich die Trageeinrichtungen 20 über die beiden Kammern 4, 37.

Die beiden Kammern 4, 37 sind unabhängig voneinander temperierbar. Dazu sind die beiden Kammern 4, 37 durch eine Trennwand 6 gegenseitig thermisch isoliert. Somit sind die Kammern 4, 37 jeweils weitgehend thermisch entkoppelt. Die Trennwand ist aus einem Kunststoff mit besonders niedrigem Wärmeleitwert oder einem isolierenden Schichtsystem aufgebaut. Bei dem Schichtsystem ist eine erste und eine dritte Schicht vorgesehen, die die Außenflächen der Trennwand 6 bilden. Zwischen diesen Außenflächen ist als zweite Schicht eine Isolationsschicht vorgesehen. Diese Isolationsschicht besteht aus einem aufgeschäumten Kunststoff, einer Mineralwolle oder, für besondere Anforderungen, aus einem zumindest annähernd luftleeren Raum.

An der Innenseite des Gehäuses 61 des Aufnahmewagens 51 sind Halteeinrichtungen 3 zur Aufnahme der Trageeinrichtungen 20 für Speisen vorgesehen. Die Halteeinrichtungen 3 bestehen aus Leisten, auf welchen die Trageeinrichtungen 20 so aufliegen, dass eine vorgesehene vertikale Position eingehalten wird. Die Halteeinrichtungen 3 können auch als Schienen vorgesehen sein. So kann ein Kippen der Trageeinrichtung 20 verhindert werden, wenn die Trageeinrichtung 20 nicht vollständig in den Raum 2 eingeschoben ist. Die Halteeinrichtungen 3 enthalten an der der Andockstation 50 zugewandten Seite Anschlagselemente (hier nicht dargestellt), die eine Einschubtiefe der Trageinrichtungen 20 begrenzen. So können die Trageinrichtungen nicht nach hinten aus dem Aufnahmewagen 51 hinausragen und ein Andocken des Aufnahmewagens 51 an die Andockstation 50 blockieren.

Der Aufnahmewagen 51 enthält in diesem Ausführungsbeispiel vier Räder 53. Mit diesen Rädern 53 kann der Aufnahmewagen mit geringem Kraftaufwand verschoben werden. Die Räder sind über eine Achse an einer Radaufnahme drehbar gelagert. Bevorzugt ist ein Lager, z.B. ein Wälzlager oder Gleitlager, zwischen Achse und Rad 53 vorgesehen. Die Radaufnahme sind unten der Bodenfläche 62 des Gehäuses 61 des Aufnahmewagens 51 befestigt. Mindestens zwei der Radaufnahmen können jeweils ein Lager aufweisen, dessen Drehachse senkrecht zur Bodenfläche 62 des Aufnahmewagens 51 ausgerichtet ist. Mit diesen Lagern sind mindestens zwei der Räder 53 lenkbar ausgeführt, wodurch ein Bewegen des Aufnahmewagens 51 um eine Kurve deutlich vereinfacht wird. Die Radaufnahmen können Bremselemente, die auf die Räder 53 wirken, aufweisen. Diese Bremselemente sind umschaltbar ausgeführt. In einer ersten Umschaltposition sind die Räder 53 so blockiert, dass der Aufnahmewagen gebremst ist. In einer zweiten Umschaltposition sind die Räder 53 freigegeben, wodurch der Aufnahmewagen 51 leicht verschoben werden kann.

In einem weiteren Ausführungsbeispiel enthält der Aufnahmewagen 51 eine Aufnahme für einen Verschiebemechanismus (hier nicht dargestellt). Der Verschiebemechanismus kann beispielsweise ein Hubwagen, ein Rollbrett etc. sein. Es kommen auch luftkissenbasierte Verschiebesysteme infrage. Bei den Luftkissenbasierten Verschiebesystemen wird mit Hilfe eines Gebläses Luftstrom erzeugt, der auf zwischen Verschiebemechanismus und Boden wirkt und so ein Luftkissen erzeugt. Durch das Luftkissenbasierte System lässt sich der Aufnahmewagen 51 besonders leicht verschieben und ist nach Ausschalten des Luftstroms besonders standsicher.

Die Andockstation 50 ist dazu vorgesehen, stationär an einem Ort zu verbleiben. An der Andockstation sind Standelemente 54 vorgesehen. Diese Standelemente 54 sind so ausgelegt, dass sie die durch die Räder 53 mit den zugehörigen Radaufnahmen bzw. Verschiebemechanismus verursachten Höhendifferenz ausgleichen. Durch die Standelemente wird ein passgenaues Ankoppeln des Aufnahmewagens 51 ermöglicht.

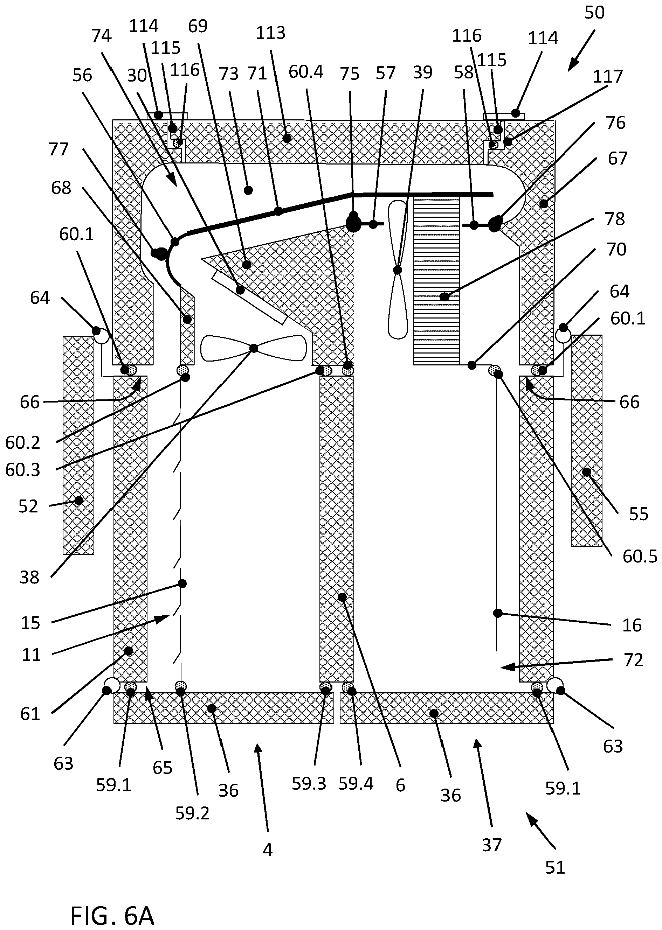

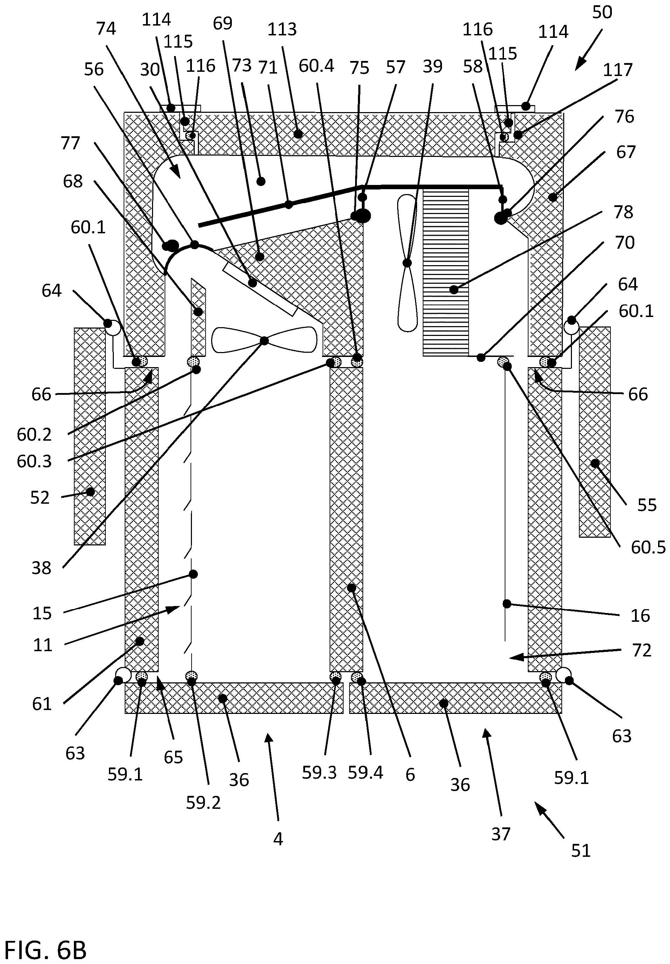

Die Andockstation 50 dient zur Erzeugung eines oder mehrerer temperierter Luftströme. Die Temperierten Luftströme können dabei kalte, warme und/oder heiße Luftströme sein. FIG. 6A und FIG. 6B zeigen ein erfindungsgemäßes Ausführungsbeispiel für ein System 1 zur Temperierung oder Erhitzung von Speisen, das einen Aufnahmewagen 51 und eine Andockstation 50 mit umschaltbaren Luftströmen aufweist. In FIG. 6A ist der Aufnahmewagen 51 in einem an die Andockstation 50 angedockten Zustand dargestellt.

Der Aufnahmewagen 51 weist in diesem Ausführungsbeispiel einen andockseitige erste Türe 52 der ersten Kammer 4 und eine andockseitige zweite Tür 55 der zweiten Kammer 37 auf. Die andockseitigen Türen 52, 55 sind mit Scharnieren 64 an dem Gehäuse 61 schwenkbar befestigt. Die Scharniere 64 sind so ausgelegt, dass die andockseitigen Türen 52, 55 um zumindest 270° geschwenkt werden können. Dadurch können die andockseitigen Türen 52, 55 so geöffnet werden, dass sie im geöffneten Zustand zumindest parallel zum Gehäuse 61 des Aufnahmewagens 51 verlaufen. Die andockseitigen Türen 52 sind nicht auf eine zweiflüglige Ausführung beschränkt. Es ist auch eine einflüglige oder mehrflüglige Ausführung der Türen denkbar. Außerdem sind Rolltüren, die aus segmentierten Flächen oder einer flexiblen aufrollbaren Fläche bestehen, mit zugehörigen Führungsschienen denkbar.

In diesem Ausführungsbeispiel weist der Aufnahmewagen 51 zwei frontseitigen Türen 36, die jeweils für die ersten Kammer 4 und die zweite Kammer 37 vorgesehen sind, auf. Die frontseitigen Türen 36 sind mit Scharnieren 63 an dem Gehäuse 61 schwenkbar befestigt. Die Scharniere 53 sind so ausgelegt, dass die andockseitigen Türen 52, 55 um zumindest 180° geschwenkt werden können. So können die frontseitigen Türen 36 in einem Umfang geöffnet werden, der ein einfaches Einführen und Entnehmen einer Trageeinrichtung 20 ermöglicht. In einem weiteren Ausführungsbeispiel können die frontseitigen Türen 36 auch einen Schwenkwinkel von 270° aufweisen. Es ist auch eine einflüglige oder mehrflüglige Ausführung der Türen denkbar. Außerdem sind Rolltüren, die aus segmentierten Flächen oder einer flexiblen aufrollbaren Fläche bestehen, mit zugehörigen Führungsschienen denkbar.

Der Aufnahmewagen 51 weist in diesem Ausführungsbeispiel frontseitige Dichtungen 59 auf. An dem Gehäuse 61 des Aufnahmewagens ist an der frontseitigen Stirnfläche 65 des Gehäuses 61 eine umlaufende Dichtung 59.1 vorgesehen, die dichtend zwischen der frontseitigen Stirnfläche 65 des Gehäuses 61 und der frontseitigen Tür 36 angeordnet ist. Die Seitenwand 15 mit den Austrittsöffnungen weist eine Dichtung 59.2 auf, die so angeordnet ist, dass sie an der frontseitigen Tür 36 dichtend anliegt, wenn die frontseitige Tür 36 geschlossen ist. Im Bereich der Trennwand 6 sind in diesem Ausführungsbeispiel zwei Dichtungen 59.3 und 59.4 vorgesehen, die dichtend an der geschlossenen frontseitigen Tür 36 anliegen. Dabei ist die linke Dichtung 59.3 für den linken Flügel der frontseitigen Tür und die rechte Dichtung 59.4 für den rechten Flügel der frontseitigen Tür vorgesehen. Ist in einem Ausführungsbeispiel eine einflüglige frontseitige Tür 36 vorgesehen, ist auch die Verwendung einer einzelnen Dichtung 59.3 im Bereich der Trennwand denkbar.

Auf der der Andockstation 50 zugeordneten Seite weist der Aufnahmewagen 51 in diesem Ausführungsbeispiel andockseitige Dichtungen 60 auf. An dem Gehäuse 61 des Aufnahmewagens 51 ist an der andockseitigen Stirnfläche 66 des Gehäuses 61 eine umlaufende Dichtung 60.1 vorgesehen, die dichtend zwischen der andockseitigen Stirnfläche 65 des Gehäuses 61 und dem Gehäuse 67 der Andockstation 50 angeordnet ist. Die Seitenwand 15 mit den Austrittsöffnungen 11 weist eine Dichtung 60.2 auf, die so angeordnet ist, dass sie an einem Dichtblock 68 dichtend anliegt, wenn der Aufnahmewagen 51 an der Andockstation 50 angedockt ist. Im Bereich der Trennwand 6 sind in diesem Ausführungsbeispiel zwei Dichtungen 60.3 und 60.4 vorgesehen, die dichtend an einem Trägerblock 69 der Andockstation 50 anliegen. Die Seitenwand 16 mit dem Luftschlitz 72 weist eine Dichtung 60.5 auf, die so angeordnet ist, dass sie an einem Kaltluftleielement 70 dichtend anliegt.

Das in FIG. 6A gezeigte Ausführungsbeispiel zeigt das erfindungsgemäßes Ausführungsbeispiel für ein System 1 zur Temperierung oder Erhitzung von Speisen in einer Betriebsart zur gemeinsamen Kühlung der ersten Kammer 4 und der zweiten Kammer 37. Mit Hilfe einer Luftstromumschalteinrichtung 74 sind die umschaltbaren Luftströmen so geführt, dass der gesamte durch das Gehäuse 61 umschlossene Raum mit der ersten Kammer 4 und der zweiten Kammer 37 von einem gekühlten Luftstrom durchströmt wird. Die Andockstation 50 weist einen Dichtblock 68, einen Trägerblock 69 und ein Luftstromleitelement 71 zur Luftstromführung auf. Zum Umschalten der Luftströme weist die Andockstation weiter eine erste Sperrklappe 57, eine zweite Sperrklappe 58 und eine Luftstromleitklappe 56 auf. Die erste Sperrklappe 57 ist mit einer Drehachse 76 drehbar an dem Trägerblock 69 angebracht. Die zweite Sperrklappe 58 ist mit einer Drehachse 76 drehbar an dem Gehäuse 67 der Andockstation 50 angebracht. Die Luftstromleitklappe 56 ist mit einer Drehachse 76 drehbar an der Andockstation 50 gehalten.

Um die erste Sperrklappe 57, die zweite Sperrklappe 58 und die Luftstromleitklappe 56 in eine für die jeweilige Betriebsart vorgesehene Position einzustellen, enthält die Andockstation 50 eine Antriebseinheit für die Luftführungseinstellung (nicht dargestellt). Die Antriebseinheit für die Luftführungseinstellung wirkt auf die jeweils der ersten Sperrklappe 57, der zweiten Sperrklappe 58 und der Luftstromleitklappe 56 zugeordneten Drehachse 75, 76, 77. Die Antriebseinheit enthält in einem Ausführungsbeispiel einen elektrischen Stellmotor, der über eine Getriebeanordnung eine für die jeweilige Betriebsart vorgesehene Drehbewegung in die jeweiligen Drehachsen 75, 76, 77 erzeugt. Es sind auch für jede Drehachse separate Stellmotore denkbar.

In dem Ausführungsbeispiel der Figuren FIG. 6A und FIG 6B weist das Gehäuse 67 der Andockstation 50 eine abnehmbare Rückwand 113 auf. Die Rückwand 113 ist in das Gehäuse 67 so eingesetzt, dass die Außenseite der Rückwand 113 bündig mit der rückwärtigen Außenseite des Gehäuses 67 abschließt. Die abnehmbare Rückwand 113 ermöglicht einen Zugang zur Luftstromumschalteinrichtung 74 auf der Rückseite der Andockstation 50. Dieser Zugang erleichtert ein Reinigen und Desinfizieren der Oberflächen der Luftstromumschalteinrichtung sowie der inneren Oberflächen des Gehäuses 67.

Die abnehmbare Rückwand 113 weist in diesem Ausführungsbeispiel einen umlaufenden rückwandseitigen Falz 115 auf. Dazu korrespondierend weist das Gehäuse 67 der Andockstation 50 einen gehäuseseitigen Falz 117 auf. Der gehäuseseitige Falz 117 des Gehäuses 67 ist so geformt, dass der rückwandseitige Falz 115 der Rückwand 113 aufnimmt. Die falzförmige Verbindung zwischen Gehäuse 67 und abnehmbarer Rückwand 113 reduziert einen Wärmeaustausch zwischen der äußern Umgebung und dem Innenraum der Andockstation 50. Die abnehmbare Rückwand 113 wird durch lösbare Halteelemente 114 an dem Gehäuse 67 fixiert. So kann durch Lösen der Haltelemente 114 ein Abnehmen der abnehmbaren Rückwand 113 freigegeben werden.

Zur weiteren Reduktion des Wärmeaustauschs zwischen der äußeren Umgebung des System 1 zur Temperierung oder Erhitzung von Speisen und dem Innenraum der Andockstation 50 kann in dem zwischen dem rückwandseitigen Falz 115 und dem gehäuseseitigen Falz 117 ausgebildeten Spalt eine Dichtung 115 vorgesehen sein. Diese Dichtung 115 besteht bevorzugt aus einem elastischen Material, das Unebenheiten an den Oberflächen der Falze ausgleichen kann.

Die in FIG. 6A gezeigte Luftstromumschalteinrichtung 74, ist in dem Schaltzustand "kühlen" dargestellt. In diesem Schaltzustand ist die Luftstromleitklappe 56 so eingestellt, dass sie mit dem Dichtblock 68 und dem Luftstromleitelement 71 in Kontakt ist. Außerdem sind die erste Sperrklappe 57 und die zweite Sperrklappe 58 so eingestellt, dass ein Luftstrom entlang des Luftleielements 71 ungehindert möglich ist. Hierdurch wird ein Luftstrom, der durch den der ersten Kammer 4 zugeordneten Ventilator 38 erzeugt wird, in Richtung des der zweiten Kammer 37 zugeordneten Ventilators 39 geleitet. Ein der zweiten Kammer 37 zugeordnete Ventilator 39 unterstützt dabei die Luftstromerzeugung des der ersten Kammer 4 zugeordneten Ventilators 38.

Der durch den der zweiten Kammer 37 zugeordnete Ventilator 39 erzeugte bzw. unterstützte Luftstrom wird durch den Wärmetauscher 78 eines in der Andockstation 50 vorgesehenen Kühlgeräts 41 geleitet. Ein Teil des aus dem Wärmetauscher 78 austretenden gekühlten Luftstroms wird mit Hilfe der zweiten Sperrklappe 58 abgezweigt und in Richtung der Seitenwand 15 mit den Austrittsöffnungen 11 geleitet. Dabei verläuft der Luftstrom in einem Luftkanal 73, der zumindest durch das Gehäuse 67 der Andockstation 50 in Kombination mit zumindest dem Luftstromleitelement 71, der Luftstromleitklappe 56 und dem Dichtblock 68 gebildet wird. Der andere Teil des mit Hilfe der zweiten Sperrklappe 58 abgezweigt Luftstroms wird in Richtung der Seitenwand 16 mit dem Luftspalt 72 geleitet. Der Luftstrom, der zwischen Gehäuse 61 und Seitenwand 16 mit Luftspalt 72 verläuft, wird über den Luftspalt 72 in die zweite Kammer 37 abgegeben. So wird ein kühlender Luftstrom im gesamten Raum der Andockstation 51 erzeugt. Die in der Andockstation 50 an dem Trägerblock 68 vorgesehene Wärmeerzeugungseinrichtung ist in dem Schaltzustand "kühlen" der Andockstation deaktiviert.

Das in FIG. 6B zeigt in diesem Ausführungsbeispiel die Luftstromführung 74 in dem Schaltzustand "Temperieren/Erhitzen". In dem Schaltzustand "Temperieren/Erhitzen" der Luftstromumschalteinrichtung 74, wie in FIG .6B dargestellt, ist es möglich, Luftströme mit jeweils den Kammern 4, 37 individuell zugeordneten Temperaturen zirkulieren zu lassen. In diesem Schaltzustand ist die Luftstromleitklappe 56 so eingestellt, dass sie mit dem Gehäuse 67 der Andockstation 50 und dem Trägerblock 69 in Kontakt ist. Außerdem ist die erste Sperrklappe 57 so eingestellt, dass sie mit dem Trägerblock 69 und dem Luftstromleitelement 71 in Kontakt ist. Dabei wird durch die erste Sperrklappe 57 der zwischen Trägerblock 69 und Luftstromleitelement 71 ausgebildete Luftkanal verschlossen. Außerdem ist die zweite Sperrklappe 58 so eingestellt, dass sie mit dem Gehäuse 67 der Andockstation 50 und dem Luftstromleitelement 71 in Kontakt ist. Dabei wird durch die zweite Sperrklappe 58 der im Gehäuse 67 und im Luftstromleitelement 71 ausgebildete Luftkanal 73 verschlossen.

Ein erster Luftstrom wird mit Hilfe des der ersten Kammer 4 zugeordneten Ventilators 38 erzeugt. Zum Temperieren des Luftstroms bläst der Ventilator 38 die aus der ersten Kammer 4 angesaugte Luft auf die Wärmeerzeugungseinrichtung 30, die an dem Trägerblock angebracht ist. Die Wärmeerzeugungseinrichtung 30 erhitzt den daran vorbeilaufenden durch den Ventilator 38 erzeugten Luftstrom. Der so erwärmet Luftstrom wird durch die Luftstromleitklappe 56 zwischen das Gehäuse 67 der Andockstation 50 und den Dichtblock 68 geleitet. Der so entstehende Luftstrom wird weiter in einen durch die Seitenwand 15 mit den Luftaustrittsöffnungen 11 und dem Gehäuse 61 des Aufnahmewagens 51 gebildeten Luftkanal geleitet. Über die Austrittsöffnungen 11 in der Seitenwand 15 strömt der tempereierte erste Luftstrom in die erste Kammer 4.

Ein zweiter Luftstrom wird mit Hilfe des der zweiten Kammer 37 zugeordneten Ventilators 39 erzeugt. Zum Kühlen des zweiten Luftstroms bläst der Ventilator 38 die aus der zweiten Kammer 37 angesaugte Luft auf einen Wärmetauscher 78. Der Wärmetauscher 78 ist Bestandteil eines Kältegeräts 41 und gibt die im Kältegerät erzeugte Kälte an den Luftstrom ab. Die in dem Kältegerät 41 erzeugte Kälte wird mit Hilfe eines Kältemittels an den Wärmetauscher 78 übertragen. Der so gekühlte zweite Luftstrom wird in einen durch die Seitenwand 16 mit den Luftspalt 72 und dem Gehäuse 61 des Aufnahmewagens 51 gebildeten Luftkanal geleitet. Durch den Luftspalt 72 am Ende der Seitenwand 16 strömt der tempereierte zweite Luftstrom in die zweite Kammer 37.

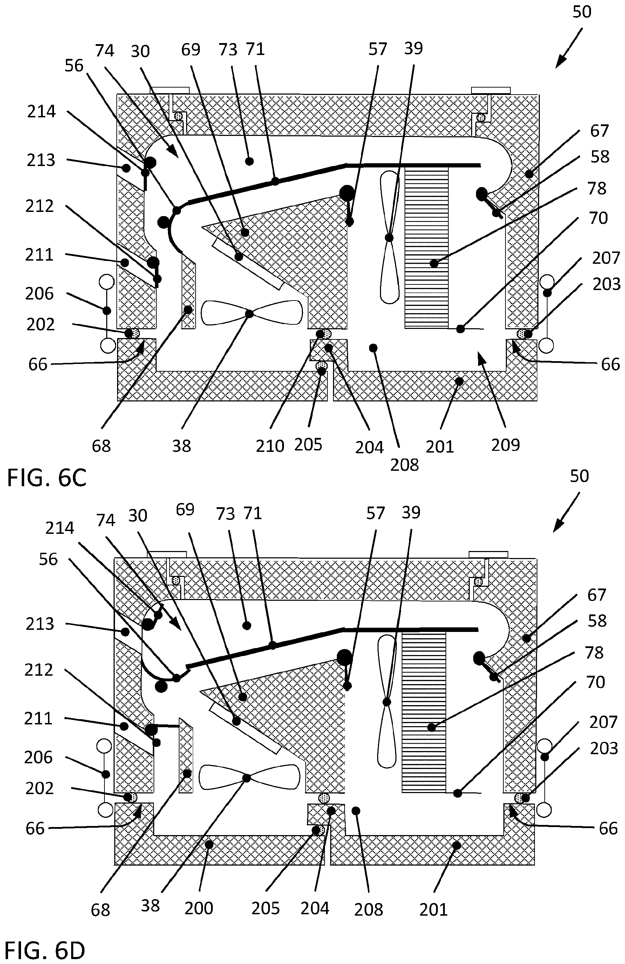

FIG. 6C zeigte ein Ausführungsbeispiel des Systems 1 zur Temperierung oder Erhitzung von Speisen, insbesondere der Andockstation, in einer Betriebsart eines Desinfizierens. Mit Hilfe einer Luftstromumschalteinrichtung 74 sind die umschaltbaren Luftströme so geführt, dass der gesamte Innenraum der Andockstation 50 durchströmt ist. Das System 1 kann, wie in diesem Ausführungsbeispiel gezeigt, eine Frischluftöffnung 211 mit einem zugehörigen Umlenkmechanismus 212 und eine Abluftöffnung 213 mit einem Verschlussmechanismus 214 aufweisen. Die Frischluftöffnung 211 ist zwischen Seitenwand des Gehäuse 68 und Dichtblock 68, in diesem Ausführungsbeispiel in der Seitenwand des Gehäuse 67, angeordnet. Die Abluftöffnung 213 zwischen im Eckbereich des Gehäuse 67 am Ende des Luftkanals 73, in diesem Ausführungsbeispiel in der Seitenwand des Gehäuse 67, angeordnet. Die Positionen der Frischluftöffnung 211 und der Abluftöffnung 213 sind nicht auf die Seitenwand des Gehäuses 67 beschränkt und können auch in der Bodenfläche und/der oberen Abschlussfläche des Gehäuses 67 vorgesehen sein. In der Betriebsart des Trocknens ist die Frischluftöffnung 211 durch den Umlenkmechanismus 212 und die Abluftöffnung 213 durch den Verschlussmechanismus 214 verschlossen.

In diesem Ausführungsbeispiel weist die Andockstation eine erste Schutztür 200 und eine zweite Schutztür 201 auf. Die erste und die zweite Schutztür 200, 201 sind beispielsweise jeweils mit Doppelgelenkscharnieren 206 und 207 am Gehäuse 67 der Andockstation 50 befestigt. Durch die Doppelgelenkscharniere 206, 207 ist es möglich, die Schutztüren so zu öffnen, dass sie den Andockvorgang der Andockstation 50 mit dem Aufnahmewagen 51 nicht behindern.

Die erste Schutztür 200 weist ein Dichtelement 202 auf. Das Dichtelement 202 steht im geschlossenen Zustand der ersten Schutztür 200 dichtend mit dem Gehäuse 67 in Kontakt. An der zweiten Schutztür ist ein Dichtelement 203 vorgesehen, das bei geschlossener zweiter Schutztür 201 dichtend mit dem Gehäuse in Kontakt ist. An einem Dichtfalz 204 der zweiten Schutztür 201 ist eine Dichtung 205 vorgesehen, die mit der ersten Schutztür 200 dichtend in Kontakt ist, wenn die beiden Schutztüren 200 und 201 im geschlossenen Zustand sind. Eine weitere Dichtung 210 an dem Dichtfalz 204 ist dazu vorgesehen, mit dem Trägerblock 69 dichtend in Kontakt zu sein, wenn die zweite Schutztür 201 im geschlossenen Zustand ist. Die Schutztür 200 weiset im geschlossenen Zustand einen Abstand zum Dichtblock 68 und die Schutztür 201 einen Abstand zum Kaltluftleielement 70 auf. Dieser Abstand ist dazu vorgesehen, dass ein Luftstrom ungehindert in dem Zwischenraum 208 zwischen der ersten Schutztür 200 und dem Dichtblock 68 und/oder einem Zwischenraum 209 zwischen der zweiten Schutztür 201 und dem Kaltluftleitelement 70 hindurchströmen kann.

Die in FIG. 6C gezeigte Luftstromumschalteinrichtung 74, ist in dem Schaltzustand "desinfizieren" dargestellt. In diesem Schaltzustand ist die Luftstromleitklappe 56 so eingestellt, dass sie mit dem Dichtblock 68 und dem Luftstromleitelement 71 in Kontakt ist. Des Weiteren ist die erste Sperrklappe 57 so eingestellt, dass ein Luftstrom ungehindert entlang des Luftleitelements 71 hin zum der zweiten Kammer 37 zugeordneten Ventilator 39 strömen kann. Außerdem ist die zweite Sperrklappe 58 so eingestellt, dass der durch den Wärmetauscher 78 geleitete Luftstrom ungehindert sowohl entlang des Luftleitelements 71 als auch durch den zwischen Gehäuse 67 und dem Kaltluftleielement 70 ausgebildeten Spalt strömen kann. Hierdurch wird ein Luftstrom, der durch den der ersten Kammer 4 zugeordneten Ventilator 38 erzeugt wird, in Richtung des der zweiten Kammer 37 zugeordneten Ventilators 39 geleitet. Der der zweiten Kammer 37 zugeordnete Ventilator 39 unterstützt dabei die Luftstromerzeugung des der ersten Kammer 4 zugeordneten Ventilators 38.

Der Luftstrom, der mit Hilfe des der ersten Kammer zugeordneten Ventilators 38 erzeugt ist, wird zum Erhitzen des Luftstroms über die Wärmeerzeugungseinrichtung 30, die an dem Trägerblock 69 angebracht ist, geleitet. Die Wärmeerzeugungseinrichtung 30 erhitzt den daran vorbeilaufenden Luftstrom beispielsweise auf eine Temperatur von 120°C bis 130°C. Der so erwärmte Luftstrom wird durch die Luftstromleitklappe 56 und das Luftleitelement 71 in Richtung des der zweiten Kammer 37 zugeordneten Ventilators 39 geleitet. Der der zweiten Kammer 37 zugeordnete Ventilator 39 unterstützt dabei die Luftstromerzeugung des der ersten Kammer 4 zugeordneten Ventilators 38. Der durch den der zweiten Kammer 37 zugeordnete Ventilator 39 erzeugte bzw. unterstützte Luftstrom wird durch den Wärmetauscher 78 des in der Andockstation 50 vorgesehenen Kühlgeräts 41 geleitet. Dabei ist das Kühlgerät 41 deaktiviert, so dass der Luftstrom nicht aktiv abgekühlt wird. Der Luftstrom wird über den Zwischenraum 208 und den Luftkanal 73 zurück auf den ersten Ventilator 38 geleitet. Die so erzeugte Zirkulation des heißen Luftstroms wird 25 bis 30 Minuten aufrechterhalten, so dass jede innere Oberfläche der Andockstation 50 ausreichend lange einer zur Desinfektion geeigneten Temperatur ausgesetzt wird.

FIG. 6D zeigt das bereits zu FIG. 6C beschriebene Ausführungsbeispiel des Systems 1 zur Temperierung oder Erhitzung von Speisen, insbesondere der Andockstation in einer Betriebsart eines Trocknens.

Die Luftstromumschalteinrichtung 74 ist dementsprechend im Schaltzustand "trocknen" dargestellt. In diesem Schaltzustand ist die Luftstromleitklappe 56 so eingestellt, dass sie mit der Seitenwand des Gehäuses 67 und dem Luftstromleitelement 71 in Kontakt ist. Des weiteren ist die erste Sperrklappe 57 so eingestellt, dass ein Luftstrom ungehindert entlang des Luftleitelements 71 hin zum der zweiten Kammer 37 zugeordneten Ventilator 39 strömen kann. Außerdem ist die zweite Sperrklappe 58 so eingestellt, dass der durch den Wärmetauscher 78 geleitete Luftstrom ungehindert sowohl entlang des Luftleitelements 71 als auch durch den zwischen Gehäuse 67 und dem Kaltluftleielement 70 ausgebildeten Spalt strömen kann. Hierdurch wird ein Luftstrom, der durch den der ersten Kammer 4 zugeordneten Ventilator 38 erzeugt wird, in Richtung des der zweiten Kammer 37 zugeordneten Ventilators 39 geleitet. Der der zweiten Kammer 37 zugeordnete Ventilator 39 unterstützt dabei die Luftstromerzeugung des der ersten Kammer 4 zugeordneten Ventilators 38.

Der Umlenkmechanismus 212 ist in der Betriebsart "trocknen" so eingestellt, dass er mit der Seitenwand des Gehäuses 67 und dem Dichtblock 68 in Kontakt ist. Der Umlenkmechanismus 212 ist dabei so eingestellt, dass Frischluft aus der Frischluftöffnung 211 direkt durch den der ersten Kammer 4 zugeordnete Ventilator 38 angesaugt wird. Der Umlenkmechanismus verhindert außerdem, dass ein durch den der ersten Kammer 4 zugeordneten Ventilator 38 erzeugter Luftstrom zurück zur Frischluftöffnung 211 geleitet wird. Der Verschlussmechanismus 214 ist so eingestellt, dass der Luftstrom durch die Abluftöffnung 213 aus dem Gehäuse ungehindert ausgeleitet wird.

Der Luftstrom, der mit Hilfe des der ersten Kammer 4 zugeordneten Ventilators 38 erzeugt ist, wird zum Erhitzen des Luftstroms über die Wärmeerzeugungseinrichtung 30 geleitet. Die Wärmeerzeugungseinrichtung 30 erhitzt den daran vorbeilaufenden Luftstrom beispielsweise auf eine Temperatur von 50°C bis 60°C. Der so erwärmte Luftstrom wird durch einen durch das Luftleitelement 71 und den Trägerblock gebildeten Kanal in Richtung des der zweiten Kammer 37 zugeordneten Ventilators 39 geleitet. Der der zweiten Kammer 37 zugeordnete Ventilator 39 unterstützt die Luftstromerzeugung des der ersten Kammer 4 zugeordneten Ventilators 38. Der durch den der zweiten Kammer 37 zugeordneten Ventilator 39 erzeugte bzw. unterstützte Luftstrom wird durch den Wärmetauscher 78 des deaktivierten Kühlgeräts 41 geleitet. Der Luftstrom wird über den Zwischenraum 208 und den Luftkanal 73 zurück auf den ersten Ventilator 38 geleitet. Der so erzeugte erhitzte Luftstrom wird durch die Abluftöffnung 213 aus der Andockstation ausgeleitet.

Der Trockenvorgang wird beispielsweise zeitgesteuert für 25 bis 30 Minuten und/oder feuchtigkeitsgeführt durchgeführt. Bei der feuchtigkeitsgeführten Trocknung ist im Innenraum der Andockstation im Bereich der Abluftöffnung 213 eine Luftfeuchtigkeitserfassungseinrichtung vorgesehen. Mit Hilfe der Luftfeuchtigkeitserfassungseinrichtung wird der Trocknungsvorgang bei einer vorgegebenen Luftfeuchtigkeit, z.B. 45% - 55 % rel. Luftfeuchtigkeit, des erhitzten Luftstroms beendet.

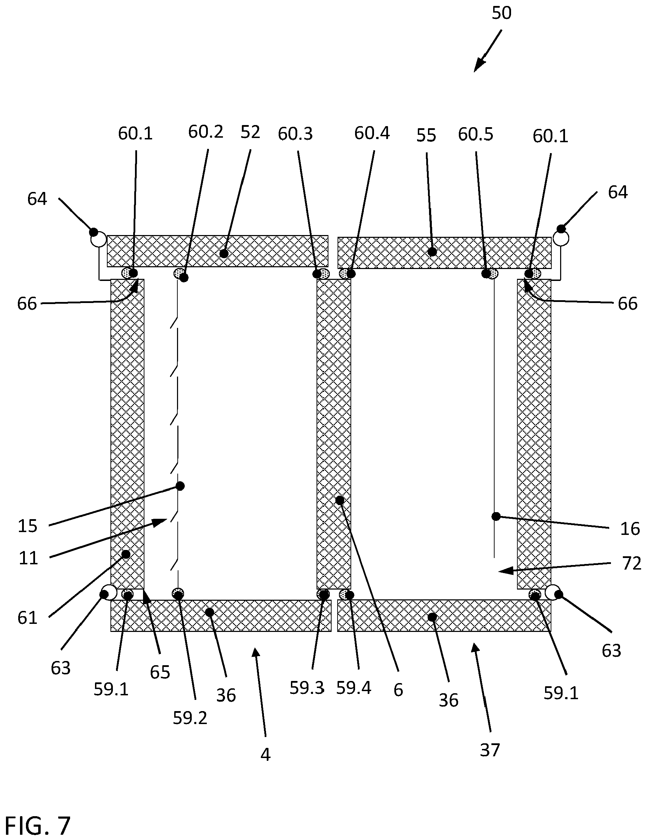

FIG. 7 zeigt einen verschlossenen Aufnahmewagen. Die Türen sind frontseitigen Türen 36, wie bereits zu FIG. 6A beschrieben, dicht verschlossen. Auf der der Andockstation 50 zugeordneten Seite weist der Aufnahmewagen 51 in diesem Ausführungsbeispiel andockseitige Dichtungen 60 auf. An dem Gehäuse 61 des Aufnahmewagens ist an der andockseitigen Stirnfläche 66 des Gehäuses 61 eine umlaufende Dichtung 60.1 vorgesehen, die dichtend zwischen der andockseitigen Stirnfläche 66 des Gehäuses 61 und den andockseitigen Türen 52, 55 wirkt. Die Seitenwand 5 mit den Austrittsöffnungen 11 weist eine Dichtung 60.2 auf, die so angeordnet ist, dass sie an der andockseitigen Tür 52 dichtend anliegt, wenn die andockseitige Tür 52 geschlossen ist. Die Seitenwand 15 mit den Austrittsöffnungen 11 weist eine weitere Dichtung 60.2 auf. Die Dichtung 60.2 ist so angeordnet, dass sie an der linken andockseitigen Tür 52 dichtend anliegt, wenn die linke andockseitigen Tür 52 geschlossen ist. Im Bereich der Trennwand 6 sind in diesem Ausführungsbeispiel zwei Dichtungen 60.3 und 60.4 vorgesehen, die jeweils dichtend an den geschlossenen andockseitigen Türen 52, 55 anliegen. Dabei ist die linke Dichtung 59.3 für den linken Flügel 52 der andockseitigen Tür und die rechte Dichtung 60.4 für den rechten Flügel der Andockseitigen Tür 55 vorgesehen.

Ist in einem Ausführungsbeispiel eine einflüglige andockseitige Tür vorgesehen, ist auch die Verwendung von einer einzelnen Dichtung 60.3 im Bereich der Trennwand denkbar. Die Seitenwand 16 mit den Luftspalt 72 weist eine weitere Dichtung 60.6 auf, die so angeordnet ist, dass sie an der rechten andockseitigen Tür 55 dichtend anliegt, wenn die linke andockseitigen Tür 55 geschlossen ist.

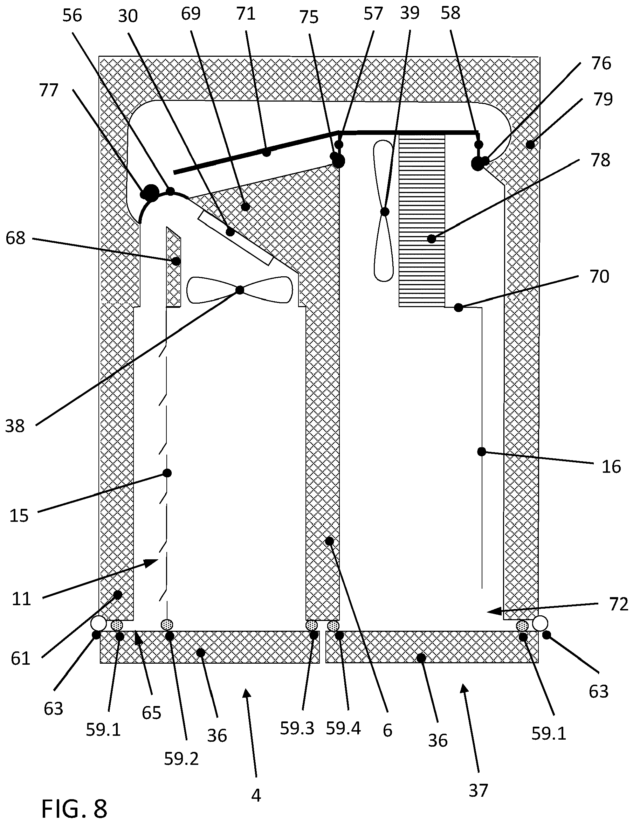

FIG. 8 zeigt ein erfindungsgemäßes Ausführungsbeispiel für ein System 1 zur Temperierung oder Erhitzung von Speisen mit integrierter Temperiereinrichtung, das eine Luftstromumschalteinrichtung 74 aufweist. Die Luftstromumschalteinrichtung 74 und die daraus resultierende Führung der Luftströme wurde bereits zur Andockstation 50 zu FIG. 6A und 6B ausführlich beschrieben. Das System 1 zur Temperierung oder Erhitzung von Speisen weist in diesem Ausführungsbeispiel alle Komponenten der Aufnahmewagen 50 und zur Andockstation 51 integriert in einem Gehäuse 79 auf. Durch das gemeinsame Gehäuse entfallen die zwischen Andockstation 50 und Aufnahmewagen 51 vorgesehenen Dichtelemente 60 und die Andockseitigen Türen 52, 55. Die integrierten Komponenten sind bereits zum Aufnahmewagen 50 und zur Andockstation 51 ausführlich beschrieben.

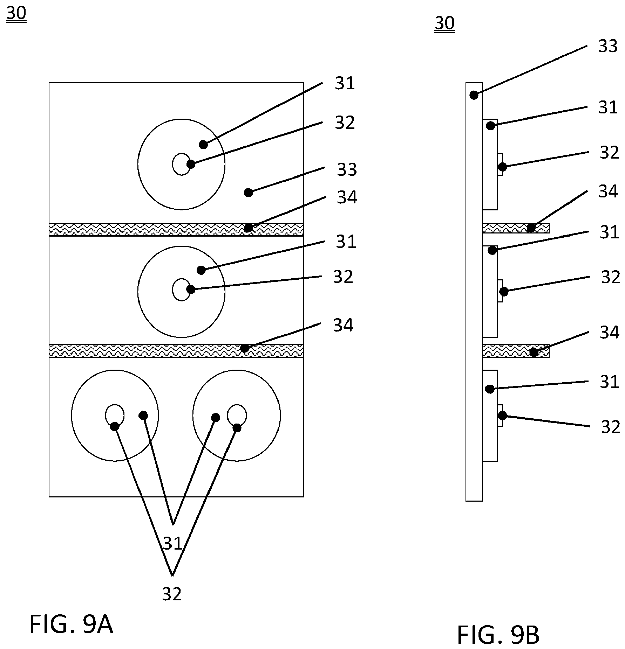

FIG. 9A zeigt die Vorderansicht und FIG. 9B eine Seitenansicht einer Wärmeerzeugungseinrichtung 30 gemäß einem erfindungsgemäßen Ausführungsbeispiel.

Die Wärmeerzeugungseinrichtung weist in diesem Beispiel vier elektrische Heizeinheiten 31 und eine zugehörige Temperatursensoreinheit 32 je Heizeinheit 31 auf. Dabei sind die Heizeinheiten 31 flach ausgeführt und flächig auf einem Trägerelement 33 befestigt.

Die Heizeinheiten 31 enthalten beispielsweise ein Widerstandselement. Das Widerstandselement wandelt elektrische Energie in Wärmeenergie um. Diese Wärmeenergie wird über die Oberfläche an die Umgebung abgegeben. Die für die Heizeinheit 31 verwendeten Widerstandselemente sind in einem Kunststoff, bevorzugt in Silikon, eingebettet. Dabei wird einerseits die erzeugte Wärme über die Fläche der Heizeinheit 31 verteilt und andererseits eine elektrische Isolation des Widerstandselements zur Umgebung erreicht. Die dem Trägerelement 33 gegenüberliegende Oberfläche der Heizeinheit 31 kann in einer Lamellenform oder einer Wellenstruktur ausgeführt sein, um die Wärmeübergabe an einen Luftstrom zu verbessern. Alternativ kann auch über Induktion, einen PTC Thermistor oder Gas geheizt werden.

Jede Heizeinheit 31 enthält bevorzugt eine Regeleinheit (hier nicht dargestellt) zur unabhängigen Regelung der Temperatur jeder Heizeinheit 31. Dazu ist jede Heizeinheit 31 und die zugehörige Temperatursensoreinheit 32 funktional mit der Regeleinheit verbunden. Die Regeleinheit erfasst mit der Temperatursensoreinheit 32 die aktuelle Temperatur der jeweiligen zugehörigen Heizeinheit 31. Mit Hilfe der erfassten Temperatur wird anhand eines vorgegebenen Temperaturbereichs die Temperatur der Heizeinheit 31 eingestellt.

Die Temperatursensoreinheiten 32 sind in den Figuren FIG. 9A und FIG 9B beispielhaft im Zentrum der Heizeinheiten 31 angebracht. Die Anbringung der Temperatursensoreinheiten 32 ist auch an anderen Positionen möglich. Bei der Anbringung der Temperatursensoreinheiten 32 an der Heizeinheiten 31 ist eine gute thermische Kopplung vorgesehen. So lässt sich die Genauigkeit der Regelung verbessern. Die jeweilige Temperatursensoreinheit 32 kann auch gemeinsam mit dem Widerstandselement in der Heizeinheit 31 eingebettet sein.

FIG. 9A und FIG. 9B zeigen beispielhaft zwei thermische Trennelemente 34, die horizontal auf dem Trägerelement 33 angeordnet sind. Die Heizeinheiten 31 können auf eine jeweils unterschiedliche Temperatur eingestellt werden. Mit den Trennelementen 34 sind die Heizelemente 31 inklusive den jeweiligen Temperatursensoreinheiten 32 thermisch entkoppelt. Damit lässt sich die Temperatur jeder der Heizeinheiten 31 unabhängig voneinander exakt einhalten und somit ein besonders effektives Erwärmen von Speisen erreichen.

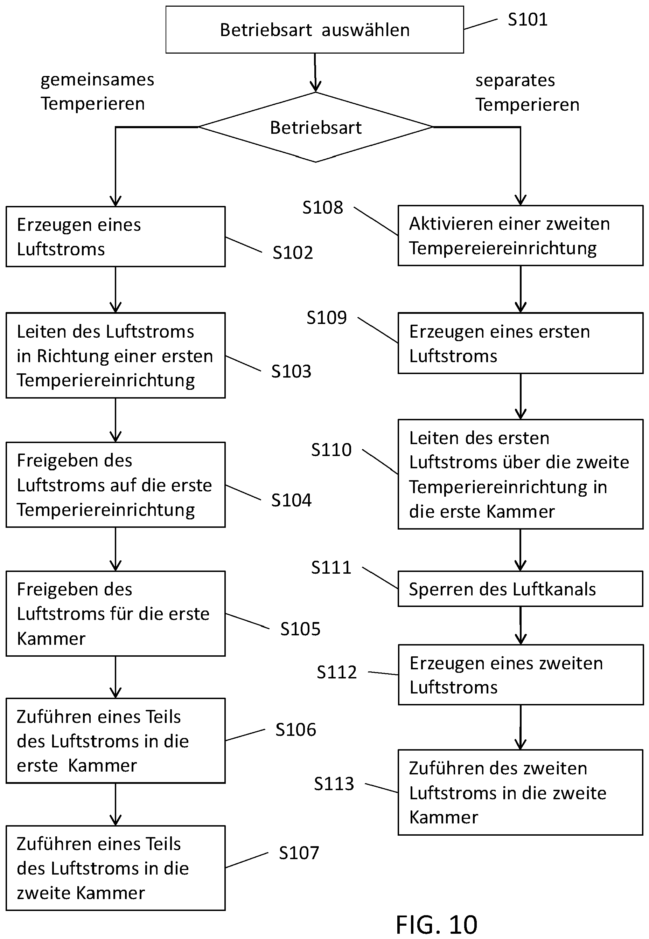

FIG. 10 zeigt ein Flussdiagramm zu einem Ausführungsbeispiel eines Verfahrens zur Temperierung oder Erhitzung von Speisen. In einem ersten Verfahrensschritt S101 erfolgt ein Auswählen einer Betriebsart.

Eine erste Betriebsart betrifft ein gemeinsames Temperieren von zumindest zwei Kammern 4, 37 eines Raums 2 zur Aufnahme mehrerer Trageeinrichtungen 20. Eine zweite Betriebsart betrifft ein separates Temperieren von zumindest zwei Kammern 4, 37 eines Raums 2 zur Aufnahme mehrerer Trageeinrichtungen 20.

Ist die Betriebsart gemeinsames Temperieren gewählt, wird in einem weiteren Schritt S102 ein Luftstrom erzeugt. Der Luftstrom kann mit einer ersten und zweiten Luftumwälzeinrichtung, insbesondere mit einem ersten Ventilator 38 und einem zweiten Ventilator 39, erzeugt sein. In einem weiteren Schritt S103 wird der erzeugte Luftstrom in Richtung einer erste Temperiereinrichtung geleitet. Das Leiten des erzeugten Luftstroms in Richtung einer erste Temperiereinrichtung 41 kann einem Ausführungsbeispiel durch Einstellen einer Luftstromleitklappe 56 erfolgen.

Es folgt der Schritt S104 des Freigebens des Luftstroms auf die erste Temperiereinrichtung. Das Freigeben des Luftstroms auf die erste Tempereiereinrichtung kann in einem Ausführungsbeispiel durch Öffnen einer ersten Sperrklappe 57 erfolgen. In einem weiten Schritt erfolgt das Freigeben des Luftstroms für die erste Kammer 4 des Raums, wobei das Freigeben des Luftstroms für die erste Kammer 4 des Raums in einem Ausführungsbeispiel durch Öffnen einer zweiten Sperrklappe 58 erfolgen kann. Das Zuführen eines Teils des Luftstroms in die erste Kammer 4 erfolgt in einem weiteren Schritt S106, wobei das Freigeben des Luftstroms für die erste Kammer 4 des Raums in einem Ausführungsbeispiel durch Öffnen einer zweiten Sperrklappe 58 erfolgt. Ein weitere Schritt S107 ist das Zuführen eines Teils des Luftstroms in die zweite Kammer 37.

Ist die Betriebsart separates Temperieren gewählt, wird weiter in einem Schritt S108 eine zweiten Temperiereinrichtung 30 aktiviert. In einem weiteren Schritt 109 erfolgt das Erzeugen eines ersten Luftstroms. Das Erzeugen des ersten Luftstroms erfolgt in einem Ausführungsbeispiel mit der ersten Luftumwälzeinrichtung, insbesondere mit dem ersten Ventilator 38. In einem weiteren Schritt S110 erfolgt das Leiten des ersten Luftstroms über eine zweite Temperiereinrichtung 30 in die erste Kammer 4, wobei das Leiten des ersten erzeugten Luftstroms über die zweite Temperiereinrichtung 30 in die erste Kammer 4 in einem Ausführungsbeispiel durch Einstellen einer Luftstromleitklappe 56 erfolgt.

Es folgt der Schritt S111 das Sperren des Luftkanals 73. Das Sperren des Luftkanals 73 erfolgt in einem Ausführungsbeispiel durch Schließen der ersten Sperrklappe 57 und der zweiten Sperrklappe 58. Es folgt der Schritt S112 des Erzeugens eines zweiten Luftstroms. Das Erzeugen des zweiten Luftstroms erfolgt in einem Ausführungsbeispiel mit der zweiten Luftumwälzeinrichtung, insbesondere dem zweiten Ventilator 38. In einem weiteren Schritt S113 wird der zweite Luftstrom der zweiten Kammer 37 zugeführt.

Die Erfindung ist nicht auf die dargestellten Ausführungsbeispiele beschränkt. Alle vorstehend beschriebenen Merkmale oder in den Figuren gezeigten Merkmale oder in den Ansprüchen beanspruchten Merkmale sind im Rahmen der Erfindung beliebig miteinander kombinierbar.

## Patentansprüche

1. Ein System (1) zur Temperierung oder Erhitzung von Speisen aufweisend: mindestens einen Raum (2) zur Aufnahme mehrerer Trageeinrichtungen (20) für Speisen und mindestens eine Temperiereinrichtung (7, 8),
wobei mindestens ein Raum (2) zur Aufnahme mehrerer Trageeinrichtungen (20) mindestens eine Halteeinrichtung (3) aufweist, die dazu ausgelegt ist, die Trageeinrichtung (20) für Speisen aufzunehmen,
wobei die Trageeinrichtungen (20) in dem Raum (2) beabstandet angeordnet sind,
wobei der Raum (2) in zumindest zwei Kammern (4, 37) unterteilt ist, die sich jeweils bis zu zumindest einer Seitenwand (5) erstrecken,
wobei sich zumindest eine der Trageeinrichtungen (20) über mehrere Kammern (4, 37) erstreckt,
wobei jede Kammer (4, 37) unabhängig temperierbar ist, und die Kammern (4, 37) durch eine Trennwand (6) zueinander thermisch isoliert sind, und/oder
wobei die Temperiereinrichtungen (7, 8) jeder der mindestens einen Trageeinrichtung (20) hauptsächlich nur an vorher bestimmten Bereichen Wärmeenergie zuführt und/oder entzieht.

2. Das System nach Anspruch 1,
wobei die Temperiereinrichtung (7, 8) zumindest einen temperierten Luftstrom (9, 10) zum Transport der Wärmeenergie erzeugt, und
wobei zumindest ein temperierter Luftstrom (9, 10) zum Transport der Wärmeenergie zwischen den Kammern (4,37) durch eine Luftstromumschalteinrichtung (74) umlenkbar ist.

3. Das System nach Anspruch 1 oder 2,
wobei der mindestens eine Raum (2) zur Aufnahme mehrerer Trageeinrichtungen (20) für Speisen in einem Aufnahmewagen (51) angeordnet ist,
wobei die mindestens eine Tempereinrichtung (7, 8) in einer Andockstation (50) angeordnet ist, und
wobei der Aufnahmewagen (51) mit der Andockstation (50) koppelbar ist.

4. Das System nach Anspruch 3,
wobei der abgekoppelte Aufnahmewagen (51) thermisch isolierend verschließbar ist.

5. Das System nach Anspruch 3 oder 4,
wobei der Aufnahmewagen (51) mindestens ein Dichtelement (60.1, 60.2, 60.3, 60.4, 60.5) aufweist, das dazu ausgelegt ist, eine Schnittstelle zwischen dem Aufnahmewagen (51) und der Andockstation (50) thermisch zur Umgebung abzudichten.

6. Das System nach einem der der Ansprüche 1 bis 5,
wobei mindestens eine Seitenwand (5) der mindestens zwei Kammern (4, 27) mindestens eine Austrittsöffnung (11, 11-1, 11-2 .. 11-10) für den Luftstrom (9, 10) aufweist, und wobei zwischen den temperierten Luftströmen (9, 10) ein Trennelement (12) in der Seitenwand (5) vorgesehen ist, und/oder
wobei in jeder der durch die vertikal beabstandeten Trageeinrichtungen gebildeten Teilkammern (4-1 .. 4-10) mindestens eine Austrittsöffnung (11, 11-1, 11-2 .. 11-10) vorgesehen ist, wobei die Austrittsöffnung (11, 11-1, 11-2 .. 11-10) den temperierten Luftstrom (9, 10) in eine vorherbestimmte Richtung lenkt.

7. Das System nach Anspruch 6,
wobei die mindestens eine Austrittsöffnung (11, 11-1, 11-2 .. 11-10) für den temperierten Luftstrom (9, 10) direkt in die Seitenwand (5) geformt ist.

8. Das System nach Anspruch 6 oder 7,
wobei die Seitenwand (5) aus einer Platte, bevorzugt aus einem Metallblech und besonders bevorzugt aus einem Edelstahlblech, besteht.

9. Das System nach einem der Ansprüche 6 bis 8,
wobei die mindestens eine Austrittsöffnung (11, 11-1, 11-2 .. 11-10) für den temperierten Luftstrom (9, 10) eine in der Seitenwand (5) angeformte Austrittsstruktur, bevorzugt eine Lamelle, und/oder eine Düse aufweist.

10. Das System nach einem der Ansprüche 1 bis 9,
wobei jede Trageeinrichtung (20) und/oder Gruppen von Trageeinrichtungen (20) unterschiedlich temperierbar ist bzw. sind.

11. Eine Wärmeerzeugungseinrichtung (30) zur Integration in ein System (1) zur Temperierung oder Erhitzung von Speisen, insbesondere nach einem der Ansprüche 1 bis 10, aufweisend:
mindestens zwei elektrische Heizeinheiten (31), mindestens eine Temperatursensoreinheit (32) je Heizeinheit (31) und
mindestens eine Regeleinheit je Heizeinheit (31),
wobei jeweils eine Temperatursensoreinheit (32) an eine Heizeinheit (31) thermisch gekoppelt ist,
wobei jede Heizeinheit (31) und die jeweilige Temperatursensoreinheit (32) mit der Regeleinheit funktional verbunden sind,
wobei die Regeleinheit dazu ausgelegt ist, eine Temperatur der jeweiligen Heizeinheit (31) mit Hilfe der jeweiligen Temperatursensoreinheit (32) in einem vorgegebenen Bereich einzustellen, und
wobei die Temperaturen der Heizeinheiten (31) voneinander unabhängig einstellbar sind.

12. Die Wärmeerzeugungseinrichtung (30) nach Anspruch 11,
wobei zumindest eine Heizeinheit (31) auf einem Trägerelement (33) befestigt ist, und/oder wobei zumindest eine Heizeinheit (31) flach ausgeführt ist.

13. Die Wärmeerzeugungseinrichtung (30) nach Anspruch 11 oder 12,
wobei zwischen jeder der Heizeinheiten (31) mit unterschiedlich einstellbarer Temperatur ein thermisches Trennelement (34) vorgesehen ist.

14. Die Wärmeerzeugungseinrichtung (30) nach einem der Ansprüche 11 bis 13,
wobei zumindest eine der Heizeinheiten (31) ein Widerstandselement aufweist, und wobei das Widerstandselement in einem Kunststoff, bevorzugt in Silikon, eingebettet ist.

15. Die Wärmeerzeugungseinrichtung (30) nach Anspruch 14,
wobei die jeweilige Temperatursensoreinheit (32) gemeinsam mit dem Widerstandselement in der Heizeinheit (31) eingebettet ist.

16. Die Wärmeerzeugungseinrichtung (30) nach Anspruch 12,
wobei die dem Trägerelement (33) gegenüberliegende Oberfläche der Heizeinheit (31) eine Lamellenform oder eine Wellenstruktur aufweist.

17. Ein Verfahren zur Temperierung oder Erhitzung von Speisen, mit folgenden Schritten:
Auswählen (S101) der Betriebsart eines gemeinsamen Temperierens von zumindest zwei Kammern (4, 37) eines Raums (2) zur Aufnahme mehrerer Trageeinrichtungen (20) oder eines separaten Temperierens von zumindest zwei Kammern (4, 37) eines Raums (2) zur Aufnahme mehrerer Trageeinrichtungen (20),
Ausführen der folgenden Schritte in der Betriebsart gemeinsames Temperieren:
Erzeugen (S102) eines Luftstroms,
Leiten (S103) des erzeugten Luftstroms in Richtung einer erste Temperiereinrichtung (41),
Freigeben (S104) des Luftstroms auf die erste Temperiereinrichtung,
Freigeben (S105) des Luftstroms für die erste Kammer (4) des Raums,
Zuführen (S106) eines Teils des Luftstroms in die erste Kammer (4),
Zuführen (S107) eines Teils des Luftstroms in die zweite Kammer (37),
und/oder Ausführen der folgenden Schritte in der Betriebsart separates Temperieren:
Aktivieren (S108) einer zweiten Temperiereinrichtung (30),
Erzeugen (S109) eines ersten Luftstroms,
Leiten (S110) des ersten Luftstroms über die zweite Temperiereinrichtung (30) in die erste Kammer (4), Sperren(5111) des Luftkanals (73),
Erzeugen (S112) eines zweiten Luftstroms, und
Zuführen (S113) des zweiten Luftstroms in die zweite Kammer (37).

18. Das Verfahren nach Anspruch 17,
wobei in der Betriebsart des gemeinsamen Temperierens das Erzeugen (S102) eines Luftstroms mit einer ersten und zweiten Luftumwälzeinrichtung, insbesondere mit einem ersten Ventilator (38) und einem zweiten Ventilator (39), erfolgt, und/oder
wobei in der Betriebsart des gemeinsamen Temperierens das Leiten (S103) des mit der ersten Luftumwälzeinrichtung, insbesondere dem ersten Ventilator (38), erzeugten Luftstroms in Richtung einer erste Temperiereinrichtung 41 durch Einstellen einer Luftstromleitklappe (56) erfolgt, und/oder
wobei in der Betriebsart des gemeinsamen Temperierens das Freigeben (S104) des Luftstroms auf die erste Tempereiereinrichtung durch Öffnen einer ersten Sperrklappe (57) erfolgt, und/oder
wobei in der Betriebsart des gemeinsamen Temperierens das Freigeben (S105) des Luftstroms für die erste Kammer (4) des Raums durch Öffnen einer zweiten Sperrklappe (58) erfolgt, und/oder
wobei in der Betriebsart des separaten Temperierens das Erzeugen (S109) eines ersten Luftstroms mit der ersten Luftumwälzeinrichtung, insbesondere mit dem ersten Ventilator (38), erfolgt, und/oder
wobei in der Betriebsart des separaten Temperierens das Leiten (S110) des mit der ersten Luftumwälzeinrichtung, insbesondere dem ersten Ventilator (38), erzeugten Luftstroms über die zweite Temperiereinrichtung (30) in die erste Kammer (4) durch Einstellen einer Luftstromleitklappe (56) erfolgt, und/oder
wobei in der Betriebsart des separaten Temperierens das Sperren (S111) des Luftkanals (73) durch Schließen der ersten Sperrklappe (57) und der zweiten Sperrklappe (58) erfolgt, und/oder
wobei in der Betriebsart des separaten Temperierens das Erzeugen (S112) des zweiten Luftstroms mit der zweiten Luftumwälzeinrichtung, insbesondere dem zweiten Ventilator (38) erfolgt.

19. Das Verfahren nach Anspruch 17 oder 18,
mit einem Schritt zum Auswählen (S101) der Betriebsart eines Desinfizierens, und
Ausführen der folgenden Schritte in der Betriebsart Desinfizieren und/oder Trocknen:
Aktivieren der zweiten Temperiereinrichtung (30),
Erzeugen eines Luftstroms mit der ersten und zweiten Luftumwälzeinrichtung, insbesondere mit dem ersten Ventilator (38) und dem zweiten Ventilator (39),
Leiten des Luftstroms über die zweite Temperiereinrichtung (30),
Leiten des erzeugten Luftstroms in Richtung der ersten Temperiereinrichtung (41),
Freigeben des Luftstroms auf die erste Temperiereinrichtung (41),
Freigeben des Luftstroms für den Luftkanal (73),
Zurückführen des Luftstroms auf die erste Luftumwälzeinrichtung.

20. Das Verfahren nach Anspruch 17 oder 18, mit einem Schritt zum Auswählen (S101) der Betriebsart eines Trocknens, und Ausführen der folgenden Schritte in der Betriebsart Desinfizieren und/oder Trocknen:
Öffnen einer Frischluftöffnung (211),
Öffnen einer Abluftöffnung (213),
Aktivieren der zweiten Temperiereinrichtung (30),
Erzeugen eines aus der Frischluftöffnung (211) angesaugten Luftstroms mit der ersten und zweiten Luftumwälzeinrichtung, insbesondere mit dem ersten Ventilator (38) und dem zweiten Ventilator (39), Leiten des Luftstroms über die zweite Temperiereinrichtung (30),
Leiten des erzeugten Luftstroms in Richtung der ersten Temperiereinrichtung (41),
Freigeben des Luftstroms auf die erste Temperiereinrichtung (41),
Freigeben des Luftstroms für den Luftkanal (73),
Abführen des Luftstroms durch die Abluftöffnung (213).
